# EUROPEAN PATENT APPLICATION

(11) **EP 3 279 628 A1**
(43) Date of publication of application: **07.02.2018**
(21) Application number: 16773125.6
(22) Date of filing: 31.03.2016
(51) Int. Cl.: G01L 1/22

(54) **CONDUCTION-PATH-EQUIPPED MEMBER, METHOD FOR PATTERNING CONDUCTION PATH, AND METHOD FOR MEASURING CHANGES IN MEMBER**

(30) Priority: 31.03.2015 JP 2015072342; 28.10.2015 JP 2015211656
(71) Applicant: Nejilaw Inc., Tokyo 108-6028 (JP)
(72) Inventor: MICHIWAKI Hiroshi, Tokyo 135-0064 (JP)
(74) Representative: Pulieri, Gianluca Antonio
(86) International application number: PCT/JP2016/060681
(87) International publication number: WO 2016/159245

(57) **Abstract**

The present invention directly forms, on part of a member to be measured, a conduction path for measuring changes in said member. The present invention thus detects changes such as stress and displacement acting on a conduction-path-equipped member 30 intended for use in a structural member or the like. Consequently, circumstances generating stress in the member can be objectively monitored.

## Description

### Technical Field

Embodiments of the present invention relate to a structure such as a house, an apartment or a building, an edifice or construction (hereinafter, the edifice and the construction are simply and collectively referred to as the construction) such as a bridge, a steel tower, a railroad, a pipeline, a plant, a power plant, a wind power generator or a solar photovoltaic power generator, or various members such as construction materials or structural materials used for the same, an industrial machine such as construction equipment or a machine tool, or other machines or fastening members constituting the same, or members used in various places, for example, a component such as a spring, a bearing or a linear guide, a variety of transportation such as a rocket, an aircraft, a submarine, a vessel, a subway train, a bus, a truck, a car, a motorcycle, a bicycle and an elevator, office or home appliances, and disposable products, and a method of forming a conduction path to pattern a conduction path in such members.

### Background Art

Currently, various types of members are used at various places such as an edifice that forms a space such as a building, a house or a hall, a construction such as a bridge or a dam (hereinafter, the edifice and the construction are referred to as the construction), a variety of transportation including a vehicle such as a car, a bicycle or a railroad, machine equipment, an electric device, a power generation facility, and a chemical plant. Further, various materials are used therefor, for example, iron, resin, rubber, stone, concrete, wood, ceramics, and glass.

For example, there exist various constructions related to social infrastructures such as a house, an apartment, a school building, a station building, an air terminal, a hospital, a local office building, a bridge and a tunnel. Shapes of the constructions are maintained by various structural materials such as columns, roof beams or floors, ceilings, bolts, nuts and reinforced concrete. Further, it is not limited to the structural materials, and a variety of equipment or members such as windows or doors are used and have various shapes and structures using a number of materials.

The structural materials are assumed to be used for a long time. However, the structural materials are exposed to a thermal extension and contraction by temperature, a degradation over time, or an external force by an impact such as an earthquake disaster, and thus may not avoid aging. When aging is neglected, artificial disasters may occur.

Further, a disaster such as a typhoon, a tornado or an earthquake expected to become more powerful in the future applies an excessive stress or load even to windows, and the windows may be cracked or a portion of the windows may be pulled out. Neglecting them leads to breakup of the windows and may hurt people.

Thus, in the future, national resilience is important to implement reduction/prevention of disasters by monitoring and maintaining various members such as construction materials quantitatively and extensively to prevent accidents or disasters in advance.

### Disclosure of Invention

### Technical Goals

However, now there are an enormous number of constructions. It is practically impossible to determine a structural material to be intensively maintained in one of the constructions while putting a priority on a construction material for which maintenance is to be performed.

Even now, bridge maintenance inspection record cards are filled to maintain bridges, and persons in charge at local areas regularly inspect the bridges. However, such inspections are performed mainly by an appearance check with naked eyes of human. Thus, the results are different from person to person and lack objectivity, and thus may not be used to determine radical maintenance.

Various members other than the structural materials are generally repaired/replaced after broken or damaged. Thus, it is difficult to prevent an accident or a financial loss resulting therefrom.

Meanwhile, there exists a stress sensor device that is referred to as a strain gauge. The strain gauge is attached to a measurement target object using an adhesive to indirectly measure a stress applied to the measurement target object. However, this method may not distinguish between an extension of the adhesive and an extension of the measurement target object. Since the measurement target object may deteriorate or be peeled off due to temperature or humidity, a thermal effect, a different coefficient of thermal expansion, a fatigue strength by repeated expansions and contractions, or an issue of weather resistance or durability, it is essentially impossible to obtain a result of measuring an exact stress applied to the measurement target object.

As a result of a keen study performed by the present inventor(s) in view of the above issue, the present invention is directed to objectively measuring circumstances of various members, thereby determining a maintenance time of the whole of a construction, or clarifying a construction or a portion requiring a preferential maintenance, or connecting to a more excellent design.

### Technical solutions

According to an aspect of the present invention, there is provided a conduction-path-equipped member including a conduction path formed directly in the whole or a portion of a measurement target member to measure a change in the member.

The member may include a recess, and the conduction path may be formed in the recess.

The recess may be configured to define a wiring pattern of the conduction path.

The whole pattern of a series of conduction paths may be installed in a recess forming a series of grooves corresponding to the pattern of the series of conduction paths.

The conduction path may be formed to reciprocate in a predetermined direction.

A plurality of conduction paths may be formed independently.

The conduction-path-equipped member may include a first conduction path formed to reciprocate in a first direction, and a second conduction path formed to reciprocate in a second direction perpendicular to the first direction.

The first conduction path and the second conduction path may be established in parallel.

A plurality of conduction paths may be formed in a shape of matrices.

The conduction path may be configured to include at least two conduction parts having different electric resistances.

One of the conduction parts constituting the conduction path may be a good electric conductor and another of the conduction parts may be an electric resistor.

The conduction path may be configured to include a first conductive material and a second conductive material that are different materials.

The conduction path may be configured by installing a portion of different electric resistances and/or conductive materials in a line.

A plurality of conduction paths may be stacked.

The conduction path may include a planar resistance wiring provided in a planar shape, and at least one pair of electrodes to be connected to the planar resistance wiring.

The conduction path may include a plurality of conductive parts disposed to be spaced apart from each other in a direction of a plane of the planar resistance wiring.

The member may have a columnar or cylindrical surface, and the conduction path may be formed on the surface.

The conduction path may be formed in an axial direction and/or a circumferential direction of the surface.

The member may include a metallic material, and the conduction path may be formed on a surface of the member through an intervening electric insulation layer.

The member may include a plastic or composite material.

The member may include glass fiber reinforced plastic, carbon fiber reinforced plastic, silicon fiber reinforced plastic, and metal fiber reinforced plastic.

The conduction path may be electrically connected to a near field communication tag.

The conduction path may be electrically connected to a near field communication tag and a power supply device.

The conduction path may be formed by printing.

The conduction path may be formed by plating.

The conduction path may be formed by etching.

The conduction path may be deformed together with the member to output a change in a stress of the member.

The conduction path may be formed on a surface and/or a back surface of the member.

The conduction path may be formed on a peripheral surface of the member.

A plurality of conduction paths may be connected to each other in a shape of matrices.

According to another aspect of the present invention, there is also provided a method for patterning a conduction path, the method including forming, by printing and/or plating and/or etching and/or coating and/or foil tamping and/or sputtering, a conduction path directly in a portion of a measurement target member to measure a change in the member.

According to still another aspect of the present invention, there is also provided a method for measuring a change in a member using the conduction-path-equipped member described above. The member being a measurement target member may be provided in a shape of a sheet or a mesh, and the change in the member may be measured by embedding the member.

According to a further aspect of the present invention, there is provided a method for measuring a change in a member using the conduction-path-equipped member described above. The member being a measurement target member may be provided in a shape of a belt, and the change in the member may be measured by winding the member around an external member.

### Effects

According to embodiments, a change in a member or a change in an environment surrounding the member may be objectively verified at a remarkably low cost, and a wide range of objects may be objectively and remotely monitored through mass production. Further, the embodiments may also be applied to vairous types of, and a large quantity of members at a remarkably low cost.

### Brief Description of Drawings

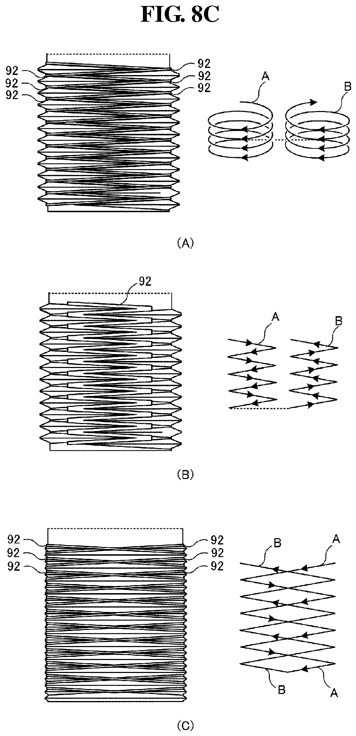

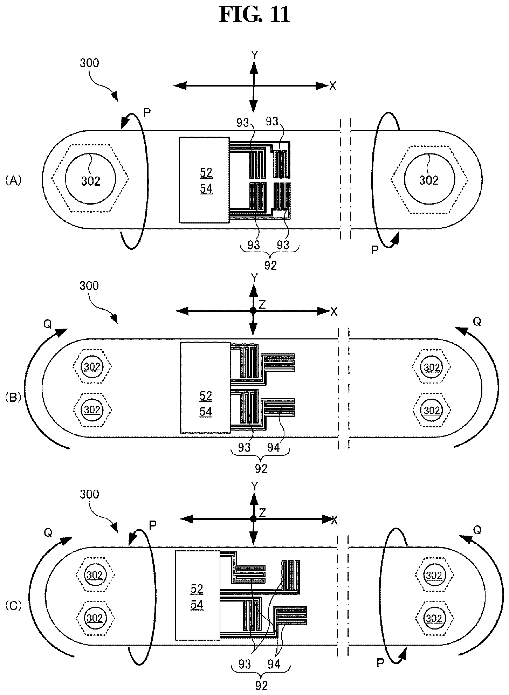

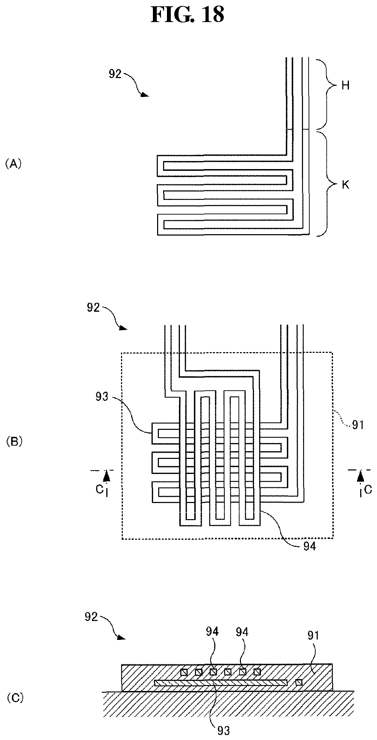

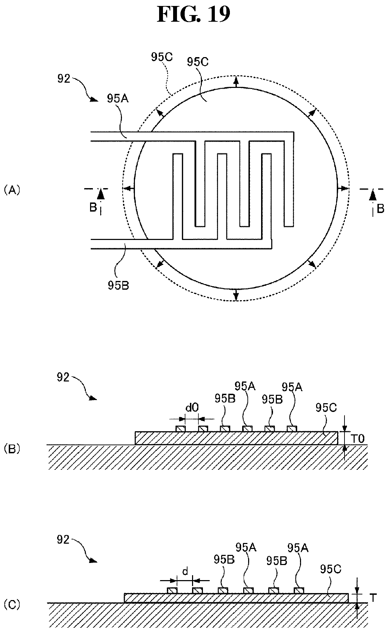

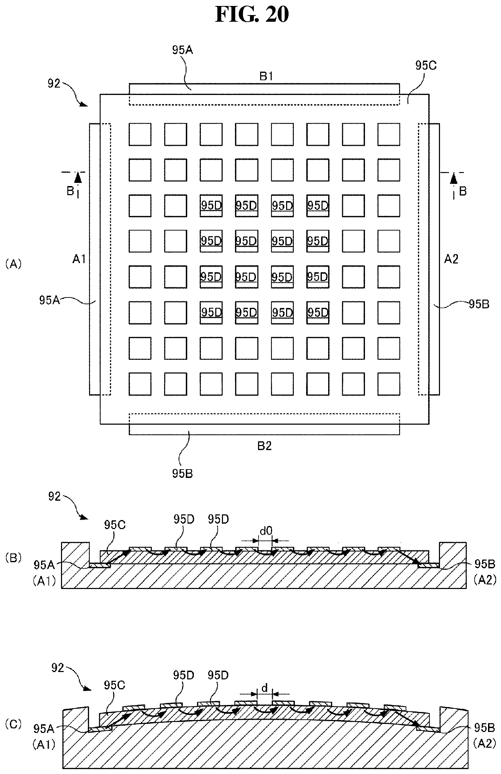

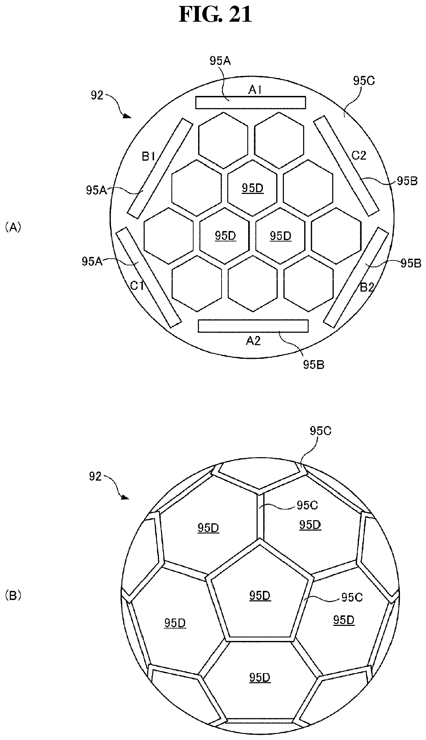

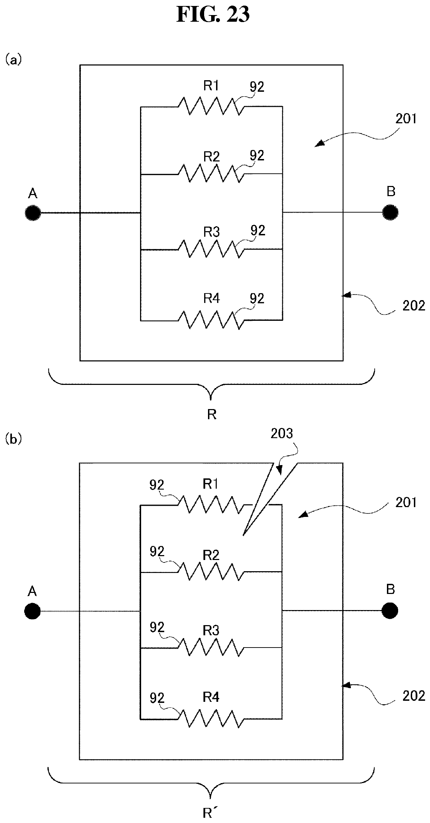

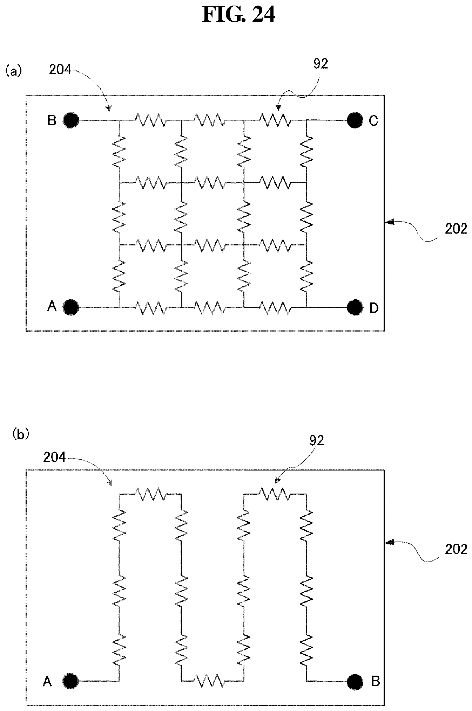

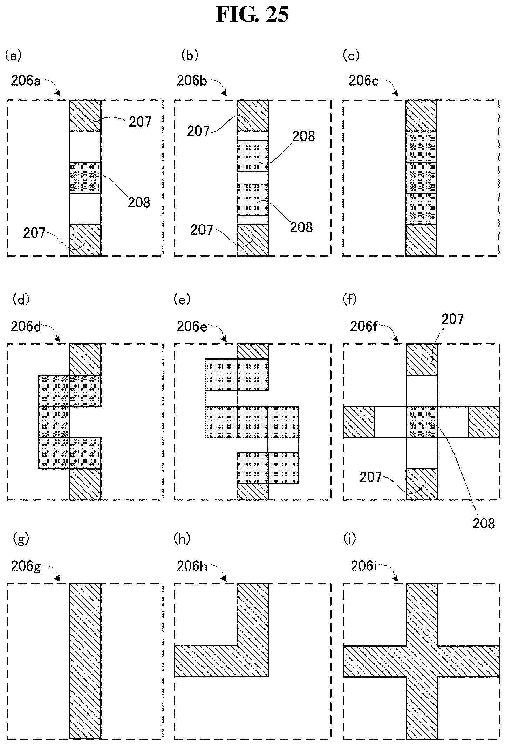

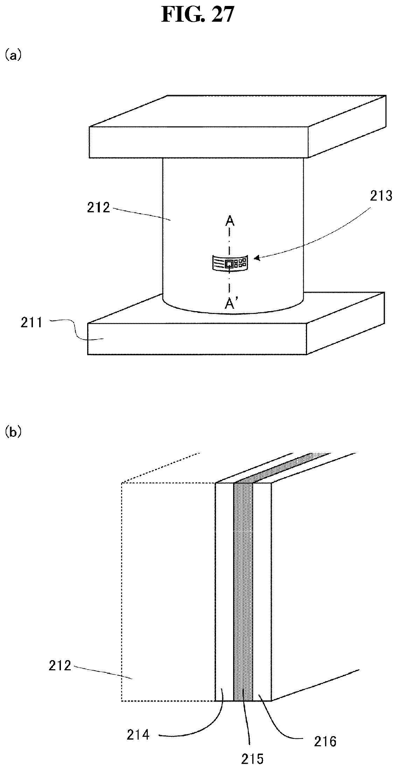

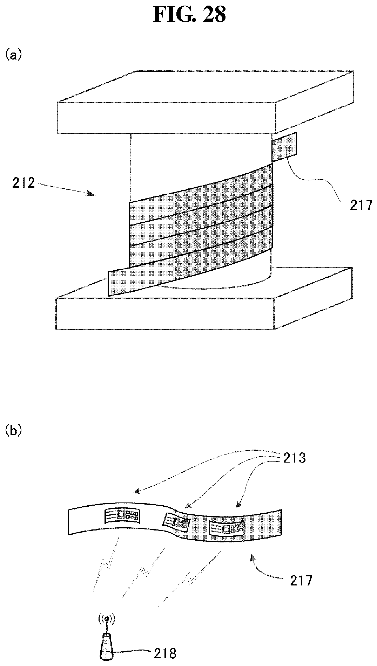

FIG. 1 illustrates an overall configuration of a measuring system of a structure using a conduction-path-equipped member according to an embodiment of the present invention.
FIG. 2 is an enlarged perspective view illustrating a construction to which a conduction-path-equipped member is applied.
FIG. 3 illustrates a male screw body which is an example of a conduction-path-equipped member used as the same measuring system, in detail, (A) is a top view thereof, (B) is a front view thereof, (C) is a rear view thereof, and (D) is a cross-sectional view cut along an arrow D-D in (B) of FIG. 3.
FIG. 4 is an enlarged perspective view of a portion of the same conduction-path-equipped member.
FIG. 5A illustrates a modified example of the same male screw body, in detail, (A) is a top view thereof, (B) is a front view thereof, and (C) is a bottom view thereof.
FIG. 5B illustrates a modified example of the same male screw body, in detail, (A) is an enlarged perspective view illustrating a portion thereof, (B) is a partial cross-sectional view thereof, and (C) through (F) are partial cross-sectional views illustrating a stacking process.
FIG. 5C illustrates a modified example of the same male screw body, in detail, (A) is a front view thereof, and (B) is a cross-sectional front view thereof.
FIG. 5D illustrates a modified example of the same male screw body, in detail, (A) is a front view thereof, and (B) is a cross-sectional view cut along an arrow B-B of (A) of FIG. 5D.
FIG. 5E illustrates a modified example of the same male screw body, in detail, (A) is a front view thereof, and (B) is a cross-sectional view cut along an arrow B-B of (A) of FIG. 5E.
FIG. 6A is a block diagram illustrating a configuration of a substrate built in the same male screw body.
(A) through (D) of FIG. 6B are circuit diagrams illustrating configurations of a bridge circuit applied to a conduction path of the same male screw body.
(A) and (B) of FIG. 6C are circuit diagrams illustrating configurations of a bridge circuit applied to a conduction path of the same male screw body.
(A) of FIG. 7 is a block diagram illustrating a hardware configuration of an information collection device of the same measuring system, and (B) of FIG. 7 is a block diagram illustrating a functional configuration of the information collection device.

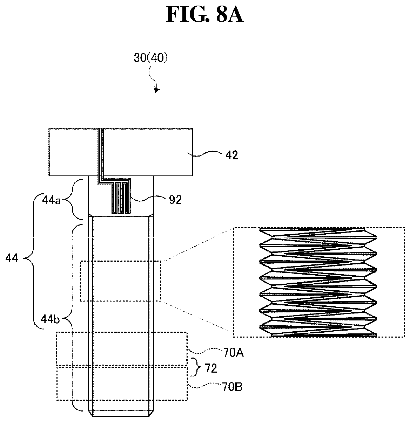

FIG. 8A is a front view illustrating a loosening preventing structure of a threaded part which is a modified example of the same male screw body.

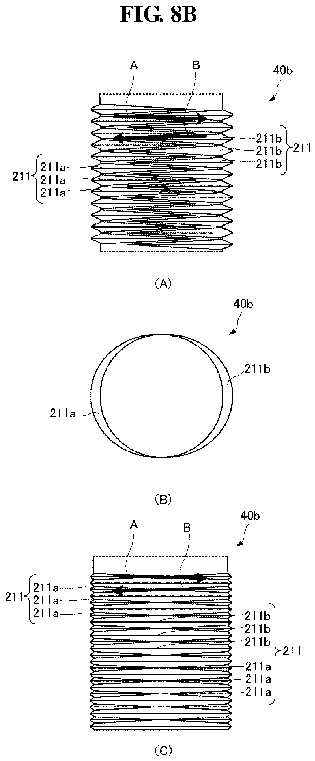

FIG. 8B illustrates the same threaded part being enlarged, in detail, (A) is a front view thereof, (B) is a bottom view thereof, and (C) is a side view thereof.
(A) through (C) of FIG. 8C are front views illustrating conduction paths being formed in the same threaded part.

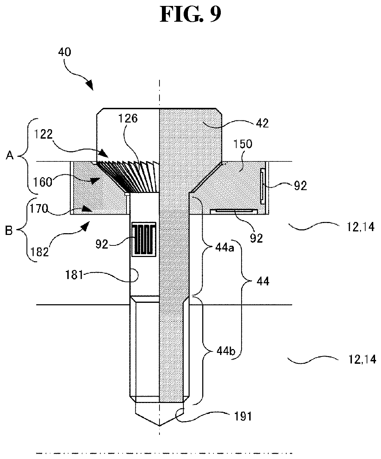

FIG. 9 is a front view illustrating an example of a loosening preventing structure of a threaded part of the same male screw body.

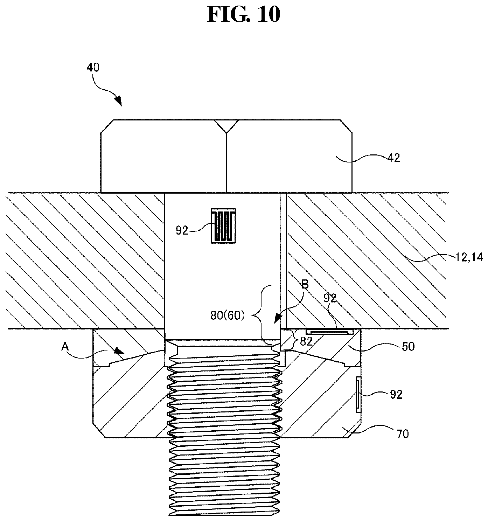

FIG. 10 is a front view illustrating an example of a loosening preventing structure of a threaded part of the same male screw body.
(A) through (C) of FIG. 11 are front views illustrating modified examples of the same conduction-path-equipped member.

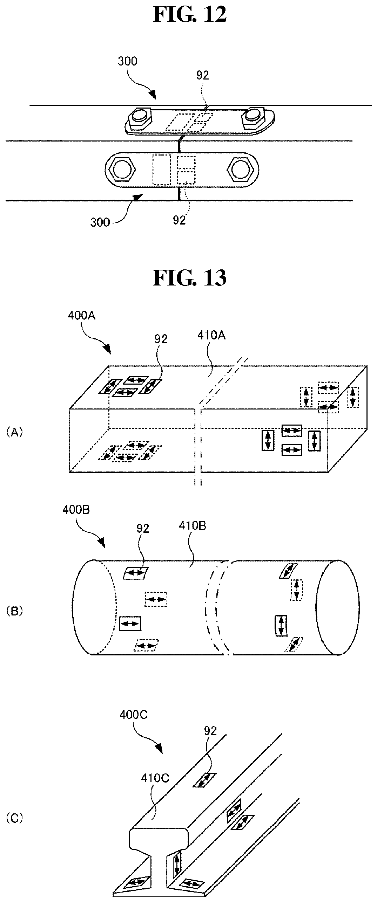

FIG. 12 is an enlarged perspective view illustrating a construction to which the same conduction-path-equipped member is applied.
FIG. 13 illustrates a modified example of the same conduction-path-equipped member.

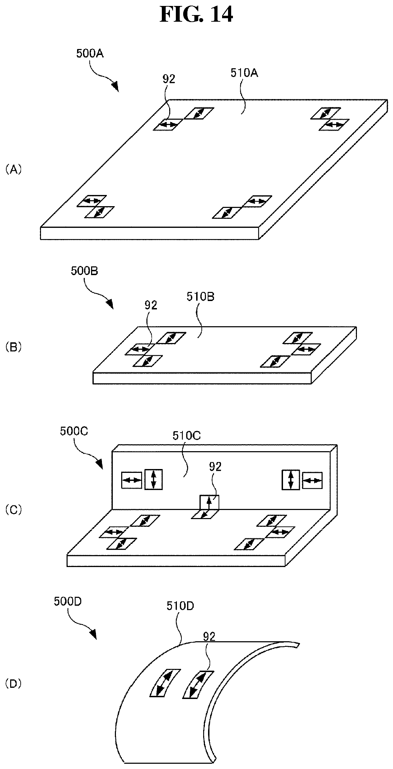

FIG. 14 illustrates a modified example of the same conduction-path-equipped member.

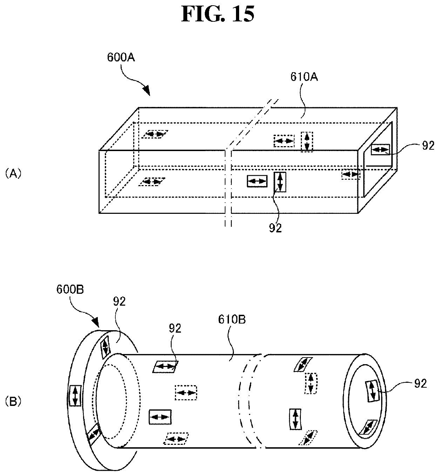

FIG. 15 illustrates a modified example of the same conduction-path-equipped member.

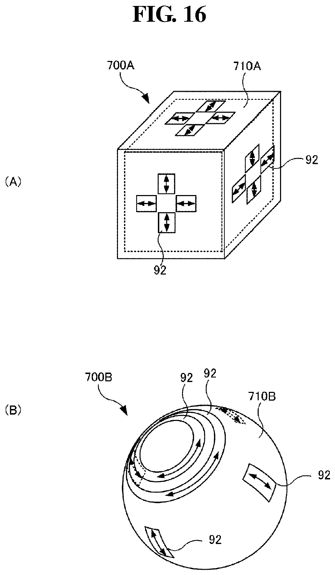

FIG. 16 illustrates a modified example of the same conduction-path-equipped member.

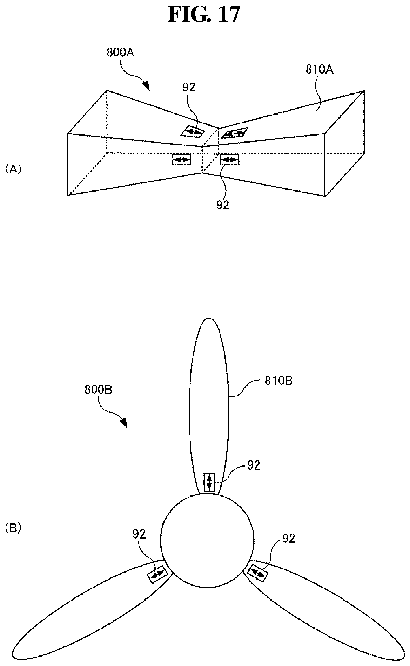

FIG. 17 illustrates a modified example of the same conduction-path-equipped member.
(A) and (B) of FIG. 18 illustrate modified examples of a conduction path of the same conduction-path-equipped member, and (C) of FIG. 18 is a cross-sectional view thereof cut along an arrow C-C of (B) of FIG. 18.
(A) of FIG. 19 illustrates a modified example of a conduction path of the same conduction-path-equipped member, and (B) and (C) of FIG. 19 are cross-sectional views thereof cut along an arrow B-B of (A) of FIG. 19.
(A) of FIG. 20 illustrates a modified example of a conduction path of the same conduction-path-equipped member, and (B) and (C) of FIG. 20 are cross-sectional views thereof cut along an arrow B-B of (A) of FIG. 20.
(A) and (B) of FIG. 21 illustrate modified examples of a conduction path of the same conduction-path-equipped member.

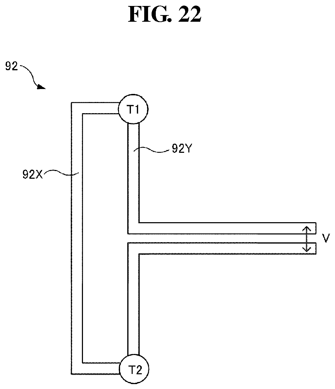

FIG. 22 illustrates a modified example of a conduction path of the same conduction-path-equipped member.
(a) and (b) of FIG. 23 illustrate a conduction circuit including a plurality of conduction paths.
(a) and (b) of FIG. 24 illustrate conduction circuits provided in a shape of two-dimensional (2D) matrices.
(a) through (i) of FIG. 25 illustrate pattern information to be used to form the same conduction circuit.

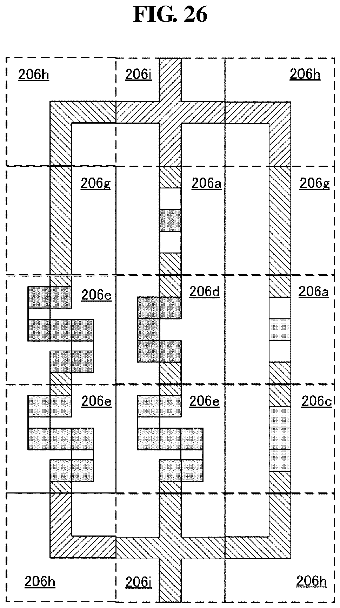

FIG. 26 illustrates a conduction circuit pattern obtained by combining the same pattern information.
(a) of FIG. 27 is a perspective view illustrating a modified example of the same conduction-path-equipped member, and (b) of FIG. 27 is a partial cross-sectional view illustrating a conduction circuit of the same conduction-path-equipped member.
(a) and (b) of FIG. 28 are perspective views illustrating a belt-shaped conduction-path-equipped member being used, and (b) of FIG. 28 further illustrates an example of detecting the conduction-path-equipped member.

### Best Mode for Carrying Out the Invention

Hereinafter, embodiments of the present invention will be described in detail with reference to the accompanying drawings.

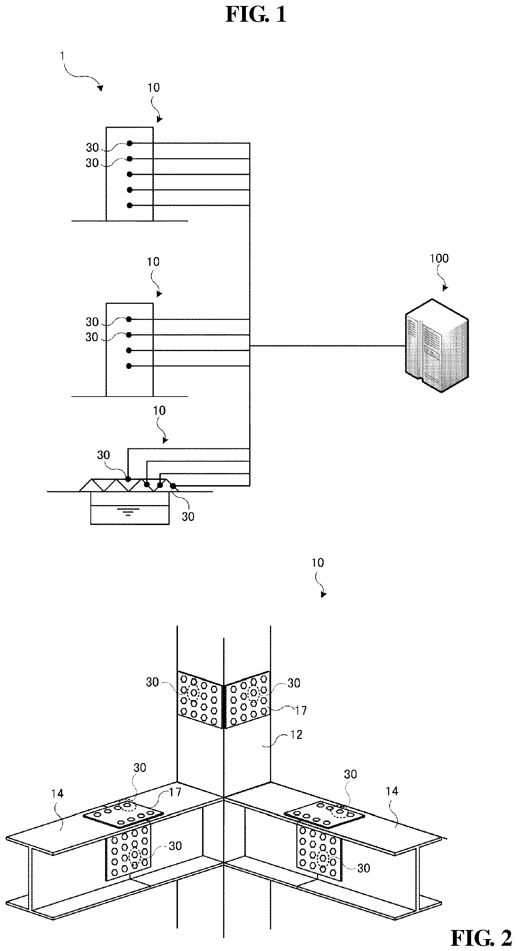

FIG. 1 illustrates a measuring system 1 of a construction using a conduction-path-equipped member according to an embodiment of the present invention. The measuring system 1 includes a plurality of constructions 10 such as buildings or bridges, a conduction-path-equipped member 30 (for example, a structural material such as H-shaped steel, C-shaped steel, T-shaped steel or I-shaped steel, a screw fastening member, or a fastening member such as a rivet) used as a member to determine a structure when building the constructions 10, and an information collection device 100 to be connected to the conduction-path-equipped member 30 through wire or wireless communication.

Herein, the conduction-path-equipped member 30 is a male screw body or a female screw body, and may be used for basic structural materials of the constructions 10.

In detail, as shown in FIG. 2, the conduction-path-equipped member 30 which is a screw fastening member is fastened using a connecting plate 17 at a plurality of positions of a joining portion to connect a column 12 which is a rectangular columnar steel material extending in a vertical direction of the constructions 10, or a joining portion to connect a roof beam 14 which is an H-steel material, so-called H-shaped steel, extending in a horizontal direction from the column 12. The conduction-path-equipped member 30 is a portion to fasten structural materials of the constructions 10. As described above, the conduction-path-equipped member 30 is involved in fastening between the structural materials, and thus may indirectly receive an internal stress generated in the structural materials. The column 12 or the roof beam 14, and the connecting plate 17 are also structural materials.

As shown in FIG. 2, places having different axial directions (fastening directions) may be selected in a plurality of conduction-path-equipped members 30. In doing so, stress states applied back and forth, left and right, and up and down to the structural materials of the constructions 10 may be measured three-dimensionally and verified.

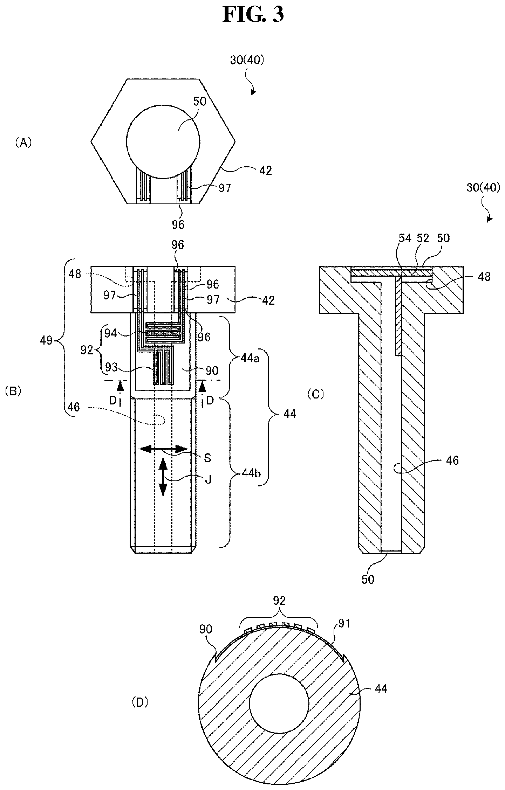

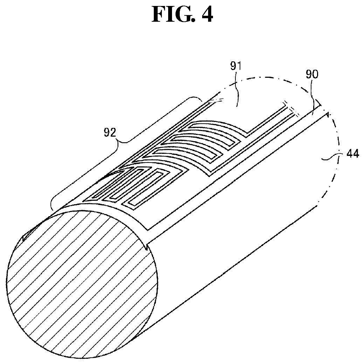

FIGS. 3 and 4 illustrate a basic structure of a case in which a male screw body 40 is employed as the conduction-path-equipped member 30. The male screw body 40 is a so-called bolt, and includes a head part 42 and a shaft part 44. The shaft part 44 includes a cylindrical part 44a and a threaded part 44b. The cylindrical part 44a is not essential.

A head part receiving space 48 is formed in the head part 42, and a shaft part receiving space 46 extending in an axial direction is formed in the shaft part 44. The head part receiving space 48 and the shaft part receiving space 46 communicate, and have a structure in which the head part receiving space 48 extends more in a diameter direction than the shaft part receiving space 46. Herein, the head part receiving space 48 and the shaft part receiving space 46 are collectively referred to as an internal space 49.

A recess 90 is formed on an outer circumferential surface of the cylindrical part 44a, and a conduction path 92 for measuring a stress is formed on a cylindrical bottom surface of the recess 90. The conduction path 92 includes a metallic material, and is deformed as the conduction-path-equipped member 30 is deformed. When the conduction path 92 is deformed, an electrical characteristic such as a resistance thereof changes, and thus the conduction path 92 outputs a stress state generated in the conduction-path-equipped member 30. An electric insulation layer 91 is formed directly on the bottom surface of the recess 90, and the conduction path 92 is formed directly on the electric insulation layer 91.

The electric insulation layer 91 may employ, for example, stacking printing, pad printing, coating, plating, and inkjet printing. Further, the electric insulation layer 91 employs various schemes, for example, film forming by sputtering an insulating material while disposing a predetermined mask, applying a silica material and heating, or applying an organic insulating material such as a polyimide-based material, an epoxy-based material, a urethane-based material, or a silicon-based material. Further, in a case in which a parent material forming the conduction path 92 has an electrical conductivity, the electric insulation layer 91 is formed through oxide coating by oxidizing a surface of the parent material. In a case in which the parent material is an aluminium-based material, the electric insulation layer 91 may also be installed by alumite processing. However, the electric insulation layer 91 is not limited thereto.

The conduction path 92 includes a first conduction path 93 and a second conduction path 94 that are independently established in parallel. The first conduction path 93 extends to reciprocate in an axial direction J which is a first direction, and detects a deformation of a surface of the conduction-path-equipped member 30 in the first direction. The second conduction path 94 extends to reciprocate in a circumferential direction S which is a second direction perpendicular to the first direction, and detects a deformation of the surface of the conduction-path-equipped member 30 in the second direction. Although a case of disposing a single first conduction path 93 is illustrated herein, a plurality of first conduction paths 93 may be disposed at positions having a predetermined phase difference (for example, 90° or 180°) in the circumferential direction, or may be disposed at intervals in the axial direction. The same is applicable to the second conduction path 94. The conduction path 92 is formed directly in the recess 90 or on the electric insulation layer 91 by stacking printing using a conductive paste, pad printing, coating, plating, inkjet printing, or sputtering. A shape of a wiring may be set through etching by installing a mask corresponding to a shape of the conduction path 92. By directly forming the conduction path 92 as described above, the conduction path 92 is not separated for a long time. In addition, when the conduction path 92 is installed using an adhesive layer including an adhesive, an accurate stress may not be measured due to a degradation of the adhesive over time. Thus, it is not employable herein.

Outer surfaces of the first conduction path 93 and the second conduction path 94 are set to not protrude from the recess 90. That is, a depth of the recess 90 is set to be at least equal to a thickness of a wiring of the first conduction path 93 and the second conduction path 94. In doing so, the first conduction path 93 and the second conduction path 94 may not be damaged as being in contact with another member. Further, the first conduction path 93 and the second conduction path 94 may also be protected by forming cover layers on the outer surfaces of the first conduction path 93 and the second conduction path 94. The cover layers also include an insulating material. In addition, barrier layers with high weather resistances may also be installed.

A recess 96 is also formed on a seat surface 42A and a peripheral surface 42B of the head part 42. A wiring 97 is formed in the recess 46 to supply electricity from a battery 52 to the conduction path 92. Thus, when the connecting plate 17 is fastened by the seat surface 42A, the wiring 97 may not be in contact with the connecting plate 17. Further, when the head part 42 is rotated by a tool such as a wrench, the wiring 97 may not be in contact with the tool.

A substrate 54 to which the wiring 97 is connected and the battery 52 configured to supply power to the substrate 54 are received in the internal space 49. Further, although a case of building the battery 52 therein is illustrated herein, a battery box may be disposed outside and power may be supplied from the battery box to the conduction-path-equipped member 30 in a wired and/or wireless manner. In addition, a case of operating the male screw body 40 using the battery 52 is illustrated herein. However, for example, in a case in which power is supplied from an outside by a power wiring using wires, the battery may be omitted. Further, in a case of a passive structure in which radio waves are received as energy from an external reader and the energy is used as power for operation, the battery 52 may also be omitted.

Further, to prevent an inflow of a foreign substance or moisture into the internal space 49, a cap 50 is installed at an opening portion of the internal space 49. By removing the cap 50 from the head part receiving space 48, the battery 52 may be replaced or the substrate 54 may be maintained without separating the male screw body 40 from the constructions 10. Rather than blocking using the cap 50, embedding using resin, rubber, or an adhesive may also be possible.

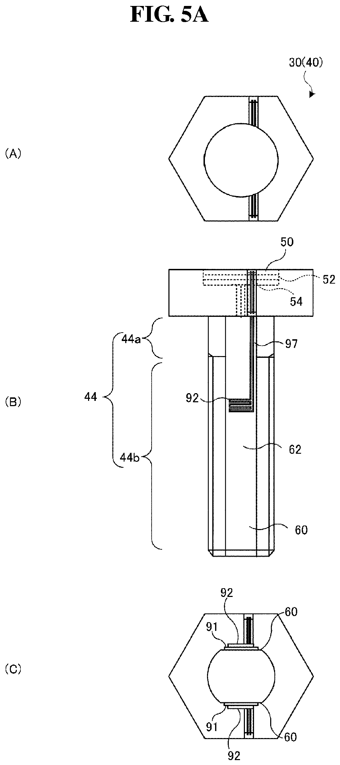

FIG. 5A illustrates another configuration of the male screw body 40. A recess (plane) 60 having a non-circular cross section is formed on the outer circumferential surface of the shaft part 44 of the male screw body 40. The recess (plane) 60 extends in an axial direction, and the conduction path 92 is formed directly therein. The recess 60 is disposed on both sides of a center axis line in a diameter direction. In doing so, for example, when a flexion moment is applied to the shaft part 44 of the male screw body 40, a compressive force is applied to the conduction path 92 of one axial direction and a tensile force is applied to the conduction path 92 of the other direction, and thus there may be a difference between resistances. Based on the difference, a change in the flexion moment applied to the male screw body 40 may be detected. Further, although a case of forming the plane 60 on the whole region of the axial direction of the shaft part 44 is illustrated, the recess (plane) 60 may also be formed restrictively in a region of the cylindrical part 44a.

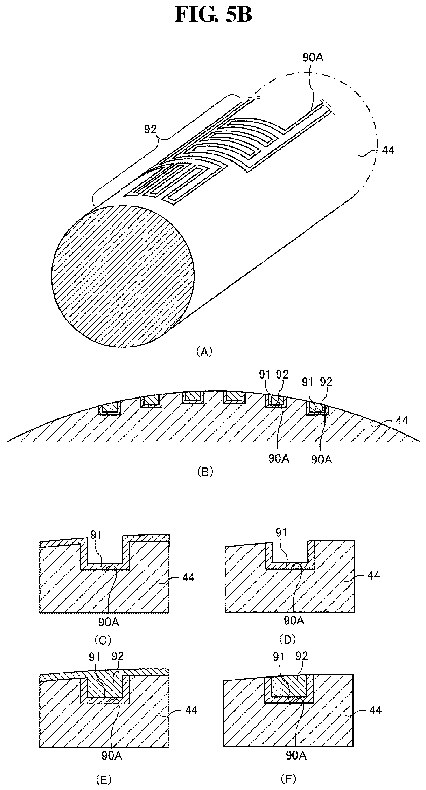

FIG. 5B illustrates still another configuration of the male screw body 40. A dent (recess) 90A configured to define the conduction path 92 is formed on the outer circumferential surface of the shaft part 44 of the male screw body 40. As shown in (B) of FIG. 5B, the electric insulation layer 91 being a ground layer is formed on an inner circumferential surface of the dent 90A, and the conduction path 92 is formed directly on the electric insulation layer 91. Thus, the conduction path 92 ends without being in contact with an external member, whereby a disconnection or a separation of the conduction path 92 may be restrained, and a deformation of the male screw body 40 being a target member may be directly measured.

The conduction path 92 is formed in the following order. First, as shown in (C) of FIG. 5B, the electric insulation layer 91 is formed on the whole of the outer circumferential surface of the shaft part 44 by coating. As shown in (D) of FIG. 5B, a portion of the electric insulation layer 91 out of the dent 90A is removed. As shown in (E) of FIG. 5B, the conduction path 92 is formed on the whole of the outer circumferential surface of the shaft part 44 by coating. Then, a potion of the conduction path 92 out of the dent 90A is removed. Hence, as shown in (F) of FIG. 5B, the electric insulation layer 91 and the conduction path 92 are formed in the dent 90A.

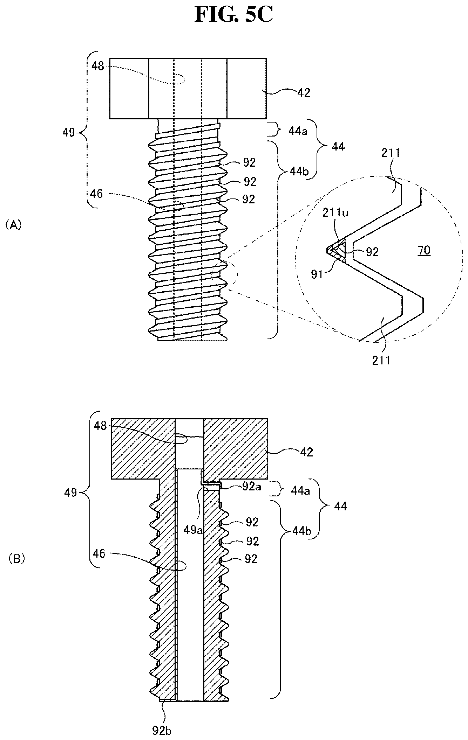

FIG. 5C illustrates a further configuration of the male screw body 40. The male screw body 40 includes the conduction path 92 formed in the threaded part 44b of the shaft part 44. In detail, as shown in a partially enlarged view (A) of FIG. 5C, the electric insulation layer 91 and the conduction path 92 are spirally formed along a bottom portion (valley bottom) 211u of a thread groove between adjacent threads 211. There is a gap between the bottom portion 211u and a thread of a female screw body 70 to be screwed therewith. Thus, when the electric insulation layer 91 and the conduction path 92 are formed using the gap efficiently, the male screw body 40 does not interfere with the female screw body 70. The bottom portion 211u of the thread groove may also be set deeper to form the conduction path 92. The conduction path 92 may also be formed on a flank side. In particular, when the conduction path 92 is formed in a recess that is recessed from a surface of the flank side, the conduction path 92 may not be disconnected by repeated detachments or frictions, and measurement may be stably performed for a long time. Further, when an overcoat with a high durability is installed on the surface of the conduction path 92, the durability of the male screw body 40 may improve.

When the conduction path is spirally formed along the thread groove, one end 92a of the conduction path 92 is positioned at the head part 42, and the other end 92b thereof is positioned at an end of the shaft part 44. Thus, as shown in (B) of FIG. 5C, the one end 92a of the conduction path 92 extends to the internal space 49 via a through-hole 49a formed in the head part 42 or the shaft part 44. The other end 92b extends to the internal space 49 via the shaft part receiving space 46.

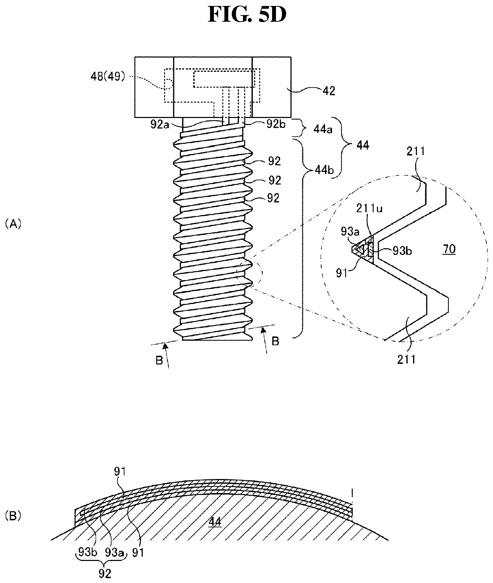

FIG. 5D illustrates a still another configuration of the male screw body 40. The male screw body 40 includes a pair of conduction paths 92 formed in the threaded part 44b of the shaft part 44. In detail, as shown in a partially enlarged view (A) of FIG. 5D, the electric insulation layer 91 and a pair of conduction paths 93a and 93b are spirally formed along a bottom portion (valley bottom) 211u of a thread groove between adjacent threads 211. The pair of conduction paths 93a and 93b is formed to be separate from each other by the intervening electric insulation layer 91.

As shown in (B) of FIG. 5D, ends of an axial direction in the pair of conduction paths 93a and 93b are electrically connected. Thus, the pair of conduction paths 93a and 93b constitutes a single conduction path 92 that spirally reciprocates. Accordingly, the one end 92a and the other end 92b of the conduction path 92 are concentrated on the head part 42. Hence, the both ends 92a and 92b extend to the internal space 49 via the through-hole 49a formed in the head part 42 or the shaft part 44. The both ends 92a and 92b may also be concentrated at the end of the shaft part 44.

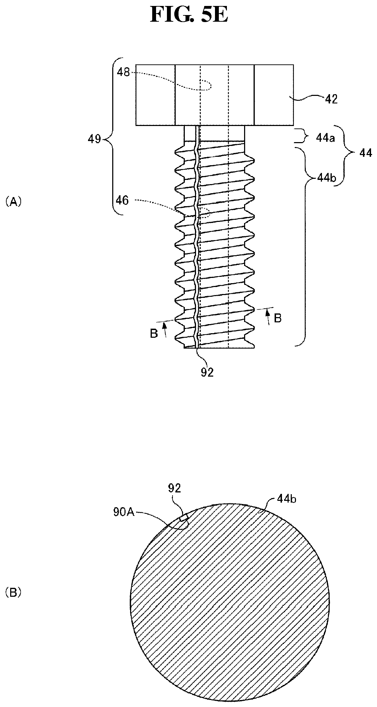

(A) of FIG. 5E illustrates yet another configuration of the male screw body 40. The male screw body 40 includes the conduction path 92 formed in a longitudinal direction, in the threaded part 44b of the shaft part 44. In detail, as shown in an enlarged cross-sectional view (B) of FIG. 5E, the dent (recess) 90A is formed to extend in a longitudinal direction with respect to the threaded part 44b, and the conduction path 92 is formed directly on an electric insulation layer being a ground layer on an inner circumferential surface of the dent 90A. The conduction path 92 is formed in the dent (recess) 90A although the conduction path 92 extends over a thread of the threaded part 44b, and thus inference may be prevented when being screwed with a female screw.

### <Suggestion of schemes of forming electric insulation layer or conduction path>

There exist various schemes of forming the electric insulation layer 91 or the conduction path 92. The schemes broadly include film forming (of course, forming a conduction path by masking other portions except for the conduction path, coating, film forming of a conductive layer, and removing the masking, or conversely forming an electric insulation layer in a conduction path by film forming of an insulation layer in the conduction path may also be referred to as pattern forming.) and pattern forming. Representative examples of the film forming are gas phase film forming and liquid phase film forming. Further, representative examples of the pattern forming are printing (for example, screen printing, transferring, or ink spraying), writing with a pen, and foil stamping.

The gas phase film forming includes vacuum deposition (for example, resistor heating vacuum deposition, electron beam evaporation/cluster beam deposition, or flash evaporation), ion plating (for example, high frequency exciting ion plating or activation reactive deposition), sputtering (for example, direct current (DC) sputtering, radio frequency (RF) sputtering, flat magnetron sputtering, or dual ion beam sputtering), molecular beam epitaxy (MBE), physical vapor deposition (PVD) such as pulse laser deposition, thermal chemical vapor deposition (CVD), plasma-enhanced CVD (PECVD), metalorganic chemical vapor deposition (MOCVD), chloride CVD, photo-induced (chemical reaction) CVD, laser CVD, and CVD such as atomic layer epitaxy (ALE).

The liquid phase film forming includes plating, coating, a sol-gel process, and spin coating.

Further, in a case in which it is impossible to form a pattern using such film forming, patterning using a resist may also be possible. For example, when patterning is performed by a photoresist (photo lithography) or screen printing, a high precision, high density pattern may be formed. The resist may be selected appropriately based on a type of film forming. For example, the resist includes an etching resist, a solder resist, and a plating resist. When removing the resist, electrolysis is used.

In addition, although not shown particularly herein, the outer surface of the conduction path 92 may further be covered with a cover layer. The cover layer may be formed using the same scheme as the electric insulation layer.

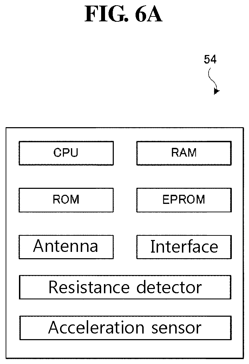

FIG. 6A illustrates a configuration of the substrate 54. The substrate 54 is a so-called radio frequency identification (RFID), and is configured as an analog circuit and/or an integrated circuit (IC) chip. The substrate 54 includes a central processing unit (CPU) configured to control all processes, a random-access memory (RAM) configured to read and write temporary data, a read-only memory (ROM) used to store a program, an erasable programmable read-only memory (EPROM) configured to store data, an interface configured to control communication between the substrate and an external device, an antenna configured to wirelessly communicate with an external device or to supply power using an external radio wave, and a resistance detector. In addition, an acceleration sensor is also installed in the base 54.

The resistance detector is connected to the wiring 97. The resistance detector simultaneously detects a resistance of the conduction path 92, converts the resistance into digital information (may also process the resistance into an analog signal), and provides the digital information to the CPU. Hence, resistance data is stored in the EPROM.

The acceleration sensor detects a vibration or a movement of the substrate 54, and calculates movement data of the male screw body 40. By this, a movement of a structure of the constructions 10 such as being bent or shaken may be verified. The movement data is stored in the EPROM. In a case in which the conduction path is utilized as a strain gauge, information that may be obtained from the conducting path as the strain gauge may be associated with time information to generate acceleration or speed data.

The resistance data or the movement data stored in the EPROM is transmitted to an external device (information collection device 100) through the antenna at an occasional timing at which a manager collects information, or at a regular timing.

Information to identify an entity of the male screw body 40 (entity identification information) is stored in the ROM or the EPROM, and an address of the constructions 10, a name thereof, and an installation location of the structure corresponding to the entity identification information are registered in the information collection device 100. By this, each male screw body 40 may be separately managed. Further, although a portion of the substrate 54 employs so-called RFID technology using an IC chip, the embodiment is not limited thereto, and other technologies may also be used.

### <Configuration of bridge circuit>

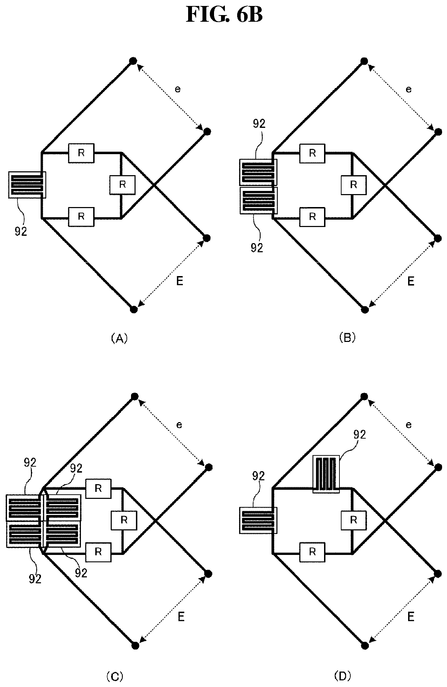

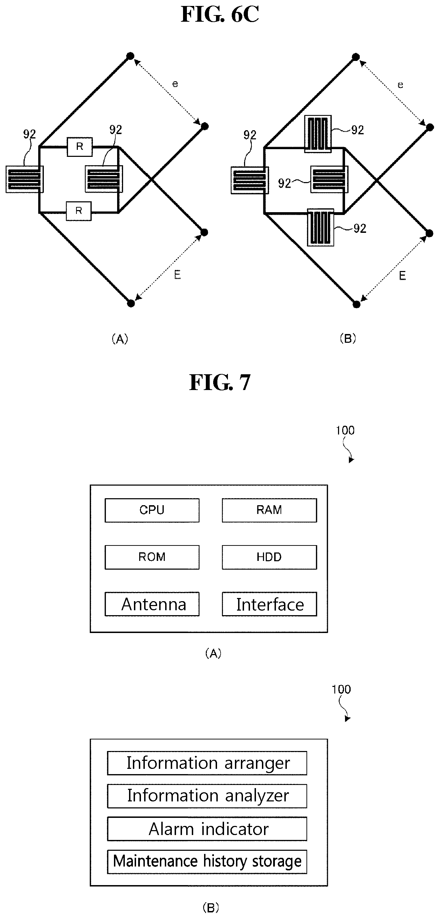

As shown in FIGS. 6B and 6C, a bridge circuit is used for a connection of the conduction path 92. A wiring or a resistor R of the bridge circuit may be provided in the middle of the wiring 97 and/or the substrate 54. E denotes an input voltage, and e denotes an output voltage. A strain may be calculated from a variation in the output voltage. The bridge circuit may also be patterned directly with respect to the conduction-path-equipped member being a measurement target.

(A) of FIG. 6B illustrates a bridge circuit of a 1-gauge scheme using a single conduction path 92. (B) of FIG. 6B illustrates a bridge circuit of a 2-series 1-gauge scheme using two conduction paths 92 disposed in series as a single gauge. The two conduction paths 92 may be disposed inside and outside a member in the same direction, and used to measure a tensile/compressive component while removing a bending component. (C) of FIG. 6B illustrates a bridge circuit of a 4-gauge scheme using two sets, each including two conduction paths 92 disposed in series, disposed in parallel. For example, four conduction paths 92 may be disposed at four positions at equal intervals in a circumferential direction of a columnar member in an axial direction to detect a tensile/compressive component. (D) of FIG. 6B illustrates a bridge circuit of a 2-gauge scheme using two conduction paths 92. The 2-gauge scheme may include a 2-gauge 2-active scheme of setting different measurement directions (extension and contraction directions) of the two conduction paths 92 and measuring respective stresses, or a 2-gauge 1-active 1-dummy scheme of setting the same measurement directions (extension and contraction directions) of the two conduction paths 92 and using one as a dummy.
(A) of FIG. 6C illustrates a bridge circuit of an opposite 2-gauge scheme of connecting two conduction paths 92 on opposite sides of a bridge. For example, the two conduction paths 92 may be disposed inside and outside a member in the same direction, and used to measure a tensile/compressive component while removing a bending component. (B) of FIG. 6C illustrates a bridge circuit of a 4-gauge scheme of connecting four conduction paths 92 on respective edges of a bridge. Two of the four conduction paths 92 may be disposed in a circumferential direction of a cylindrical member, and the other two thereof may be disposed in an axial direction, whereby the four conduction paths 92 may be used to measure an axial force. The 4-gauge scheme may also be used to measure a torque or a bending.

Further, although a Wheatstone bridge circuit is illustrated herein, other bridge circuits may also be used, for example, a Wien bridge oscillation circuit, a Maxwell bridge alternating current (AC) circuit, a heaviside bridge AC circuit, a Sobel network bridge high frequency circuit, a Schering bridge circuit, a Kale Foster bridge AC circuit, and an Anderson bridge circuit. However, the Wheatstone bridge circuit may be selected to be used as a DC circuit.
(A) of FIG. 7 illustrates a hardware configuration of the information collection device 100. The information collection device 100 is a so-called server, and includes a CPU, a RAM configured to read and write temporary data, a ROM used to store a mainboard program, an erasable hard disk drive (HDD) configured to store data, an interface configured to control communication with an external device, and an antenna configured to wirelessly communicate with the male screw body 40. Further, the antenna is not limited to one disposed in a server constituting hardware of the information collection device 100. The antenna may also be a relay antenna disposed in a vicinity of the male screw body 40 of each construction 10.
(B) of FIG. 7 illustrates a program configuration of the information collection device 100. The information collection device 100 includes an information arranger, an information analyzer, an alarm indicator, and a maintenance history storage. The information arranger accumulates resistance data and movement data collected from each male screw body 40 in a time series, in addition to names of the constructions 10, addresses thereof, detailed installation locations, installation directions, a size of the conduction-path-equipped member 30, and a manager (contact) corresponding to the entity identification information of the male screw body 40 described above.

The information analyzer interprets the collected resistance data and the movement data, and determines an abnormality. The abnormality may be determined by interpreting/determining, for example, whether an abnormal value appears with a lapse of time, or whether an overall mechanical balance of the constructions 10 is lost based on data collected from a plurality of conduction-path-equipped members 30. The alarm indicator may be configured to perform processing of outputting (reporting using a screen, a character, an illumination, or a sound) a maintenance alarm or an alert to an operator when the information analyzer determines that abnormal data is included in an analysis result. The maintenance history storage may be configured to store a maintenance history of the constructions 10.

In particular, the information analyzer may periodically measure output values of a plurality of conduction paths 92 included in a single male screw body 40, thereby verifying, for example, a disablement of a portion of the conduction paths 92. That is,

As described above, by arranging a plurality of conduction-path-equipped members 30 in the structure of the constructions 10, a deformation and/or a displacement (a variety of information of data to be converted from deformation information) occurring in the conduction-path-equipped members 30 may be detected. A result of the detection may be accessed in a wired and/or wireless manner and collected by the information collection device 100, and thus utilized as objective data. In addition, for example, the data collection may be automated, and simultaneously observation/collection may be performed approximately in real time. When an earthquake occurs, an amount of deformation or a change in an internal stress of the constructions 10 may be verified. Based on this circumstance, a priority of maintenance or a significant position may also be determined. Further, unlike information obtained from various sensors such as an acceleration sensor or a vibration gauge, acquisition of stress data based on an electric resistance of the conduction path may enable a current state of a measuring target object to be verified more accurately from current value information of deformation (including a residual strain) or deformation history information even in a stop state after an accelerative displacement or a vibration of the measuring target object disappears.

In particular, since the conduction path 92 is formed directly by printing, the conduction-path-equipped member 30 may not be separated easily, and an internal stress thereof may be verified stably for a long time (for example, for decades). In addition, since a plurality of conduction paths 92 is formed with respect to a single conduction-path-equipped member 30, it may be determined that a corresponding position of the conduction-path-equipped member 30 is damaged or broken, one of the conduction paths 92 is disconnected, or a portion of the conduction paths 92 are damaged or disabled in a case in which it is impossible to obtain outputs of a plurality of conduction paths 92 disposed in the same direction (which will be described further later). Hence, a position to be checked may be specified easily, and a matter to be checked may be clarified or a preparatory measure may be reviewed, and thus the maintenance may be performed quickly. Further, while one of the conduction paths 92 is disabled, a stress may be detected through another one of the conduction paths 92, and thus a measurement may be continued stably for a long time by this multi-structure.

Further, the electric insulation layer 91 is also formed directly on a surface of a member by printing or sputtering, and thus may not be separated or exfoliated easily for a long time (for example, for decades). Hence, an internal stress thereof may be verified stably by the conduction path 92 formed directly on the outer surface of the electric insulation layer 91.

Further, since the conduction-path-equipped member 30 includes the first conduction path 93 and the second conduction path 94, stresses applied in multiple directions may be measured simultaneously. Thus, external forces applied to the structures 10 may be verified and analyzed more precisely.

Further, although the male screw body 40 is employed as the conduction-path-equipped member 30, various fastening methods may be used. In view of an objective of the measuring system 1, the male screw body 40 may need to be provided in a structure that is not loosened at all.

As an example of this structure, FIG. 8A illustrates an example of building the conduction-path-equipped member 30 that is completely not loosened by forming two types of male screw spiral grooves in a threaded part 40b of the male screw body 40 and screwing, with the male screw body 40, a first female screw body 70A to be screwed with the spiral groove of one direction and a second female screw body 70B to be screwed with the spiral groove of the other direction, and simultaneously inserting a device configured to prevent a relative rotation therebetween. The conduction path 92 may be formed in the cylindrical part 44a of the male screw body 40.

As shown in (A) of FIG. 8B or (C) of FIG. 8B, the threaded part 40b of the male screw body 40 may include threads 211 that form an approximate diamond shape in a state of being unfolded on a plane, the threads 211 formed alternately at a phase difference of 180° in an axial direction. Further, conduction paths of different directions may be stacked through an intervening insulating layer.

As shown in (B) of FIG. 8B, the approximately diamond-shaped threads 211 include alternately a thread 211 a that forms one axial direction line, and another thread 211b that forms an axial direction line at a phase difference of 180° therefrom. As shown in (B) of FIG. 8B, the threads 211 is provided by forming a ridge line part that is highest at a center in a circumferential direction and low at both ends of the circumferential direction. Thus, the threads 211 of the threaded part 40b are approximately crescentic threads and/or a valley that extends in the circumferential direction, in a direction of a plane perpendicular to a center of axis (screw axis), and are disposed alternately on one side (the left side of the drawing) and the other side (the right side of the drawing). This circumferential structure is a structure in which a first spiral groove indicated using an arrow A overlaps a second spiral groove indicated using an arrow B, the second spiral groove having an opposite lead direction to that of the first spiral groove. Hence, the threaded part 40b is freely screwed with both the first female screw body 70A including right-handed threads and the second female screw body 70B including left-handed threads.

As described above, in a case of employing a structure of the threaded part 40b of the male screw body 40 of FIG. 8B, the conduction path 92 may be formed in one spiral groove and another spiral groove as shown in (A) of FIG. 8C. In doing so, the conduction path 92 may proceed along the one spiral groove in one direction of the axial direction (see an arrow A), and proceed along the other spiral groove in another direction of the axial direction (see an arrow B), whereby reciprocation in the axial direction may be enabled by the single continuous conduction path 92. Hence, both ends of the conduction path 92 may be concentrated on the head part or at the shaft end.

Further, as shown in (B) of FIG. 8C, the conduction path 92 may be formed such that a boundary between the one thread 211a and the other thread 211b may form a zigzag. In this example, by a zigzag conduction path A positioned on a boundary on a face side of (B) of FIG. 8C, and a zigzag conduction path B positioned on a boundary on a back side of the same figure, the conduction path 92 may reciprocate in the axial direction.

Further, as shown in (C) of FIG. 8C, the conduction path 92 may be formed to progress in zigzags in a vicinity of an approximately diamond shape of the one thread 211 a arranged in the axial direction. In doing so, one zigzag conduction path 92 may enable progress in one direction of the axial direction (see an arrow A), and another zigzag conduction path 92 may enable progress in another direction of the axial direction (see an arrow B), whereby reciprocation in the axial direction may be enabled by the single continuous conduction path 92. This conduction path 92 is provided in a structure in which a figure-of-eight conduction path 92 is continuous in the axial direction.

In another example, as shown in FIG. 9, a scheme of performing loosening prevention using a washer 150 may be employed. For example, a screw-body-side seat part 122 is formed at a part corresponding to a lower portion or a root of the head part 42 of the male screw body 40, a first receiving part 160 is formed on one side (surface side of FIG. 9) of the washer 150, and a first engaging mechanism A is provided therebetween. The first engaging mechanism A is a ratchet device. When the male screw body 40 is rotated in a loosening direction, the first receiving part 160 and the screw-body-side seat part 122 engage each other, and the first engaging mechanism A prevents a relative rotation of the first receiving part 160 and the screw-body-side seat part 122 in the corresponding rotating direction.

A second receiving part 170 is formed on another side (lower surface side of FIG. 9) of the washer 150. The second receiving part 170 faces the structure (the column 12 or the roof beam 14) of the constructions 10. A member-side seat part 182 facing the second receiving part 170 of the washer 150 is formed as a hole in the structure 12 or 14. A second engaging mechanism B is provided between the member-side seat part 182 and the second receiving part 170 of the washer 150. In detail, the shape of the member-side seat part 182 and the second receiving part 17 is a non-circular shape with respect to a center of axis. When the washer 150 rotates in the loosening direction, the second receiving part 170 and the member-side seat part 182 engage each other, and the second engaging mechanism B prevents a relative rotation of the second receiving part 170 and the member-side seat part 182 in the corresponding rotating direction. In response to the operations of the first engaging mechanism A and the second engaging mechanism B, a relative rotation of the male screw body 40 and the structure 12 or 14 is restricted by the intervening washer 150 when the male screw body 40 rotates in the loosening direction.

In this example, the conduction path 92 may be formed in the cylindrical part of the male screw body 40, in the second receiving part 170 of the washer 150, or on an outer circumferential surface of the washer 150.

Further, as shown in FIG. 10, loosening prevention may also be performed using the washer 50 as the female screw body 70. A male-screw-side cooperation area 80 having a non-circular cross section when viewed from the axial direction is formed in the shaft part 44 of the male screw body 40. The male-screw-side cooperation area 80 may also act as the plane 60 described above.

The first engaging mechanism A is provided on a plane on which the washer 50 and the female screw body 70 face each other. The first engaging mechanism A is, for example, a ratchet device. When the female screw body 70 rotates in a loosening direction with respect to the male screw body 40 to be screwed therewith, the male screw body 40 and the washer 50 engage each other, and the first engaging mechanism A prevents a relative rotation of the male screw body 40 and the washer 50 in the corresponding rotating direction. Another side of the washer 50 faces the conduction-path-equipped member 12 or 14.

A through-hole 82 of the male screw body in the washer 50 has a non-circular shape when viewed from the axial direction. Thus, the through-hole 82 engages the male-screw-side cooperation area 80 of the male screw body 40 in a circumferential direction (which is defined as an assistant engaging mechanism B).

As described above, by the first engaging mechanism A and the assistant engaging mechanism B, the female screw body 70 may be provided in a structure that is not loosened.

In this example, the conduction path 92 may be formed in the shaft part 44 of the male screw body 40, on the outer circumferential surface of the female screw body 70, in a groove of a female threaded part, or on a seat surface of the washer 150.

Further, in the above embodiment, a case of forming the conduction path 92 in the male screw body 40 being a member is illustrated. However, the embodiment is not limited thereto. For example, the conduction path 92 may also be formed on a plate material 300 including metal or reinforced resin as shown in (A) of FIG. 11. Engaging parts 302 to be fastened to a counterpart member are formed at two or more positions on the plate material 300 using bolts or rivets or by welding. Thus, the plate material 300 extends, contracts, or is distorted in response to a deformation of the counterpart member. A plurality of (here, four) first conduction paths 93 that reciprocate in a first direction X are disposed on the plate material 300 in a shape of matrices. In detail, the first conduction paths 93 are disposed in a shape of grids configured by a plurality of positions spaced apart in the first direction and a plurality of positions spaced apart in a second direction Y which is perpendicular to the first direction X. When the first conduction paths 93 are disposed in the shape of matrices as described above, detection may also be performed with respect to a screw (see an arrow P) with an axis corresponding to the first direction X of the plate material 300 from a difference of an output of each first conduction path 93. In addition, a stress in the first direction X may be detected using another first conduction path 93 although a portion of the first conduction paths 93 are disabled.

For example, as shown in the plate material 300 of (B) of FIG. 11, a plurality of (here, two) first conduction paths 93 that reciprocate in the first direction X, and a plurality of (here, two) second conduction paths 94 that reciprocate in the second direction Y may be disposed in a shape of matrices. One pair of the first conduction paths 93 is disposed at positions spaced apart from each other in the second direction Y. One pair of the second conduction paths 94 is disposed at positions spaced apart from each other in the second direction Y, further at positions spaced apart from the first conduction paths 93 in the first direction X. One pair of engaging holes 302 is formed in a vicinity of both ends of the plate material 300 at positions spaced apart from each other in the second direction Y. In doing so, in addition to the extension and contraction in the first direction X, extension and contraction in the second direction Y may also be detected. Further, a flexion moment (see an arrow Q) of a rotation in a third direction Z which is perpendicular to both the first direction X and the second direction Y may also be detected.

In another example, as shown in the plate material 300 of (C) of FIG. 11, a plurality of (here, two) first conduction paths 93 that reciprocate in the first direction X, and a plurality of (here, two) second conduction paths 94 that reciprocate in the second direction Y may be disposed in a shape of zigzag matrices. In detail, one pair of the first conduction paths 93 is disposed at positions spaced apart from each other in the first direction X and the second direction Y. One pair of the second conduction paths 94 is also disposed at positions spaced apart from each other in the first direction X and the second direction Y In doing so, various stresses such as the extension and contraction in the first direction X, the extension and contraction in the second direction Y, a screw with an axis corresponding to the first direction X (see an arrow P), a screw with an axis corresponding to the second direction Y (not shown), and a flexion moment (see an arrow Q) of a rotation in the third direction Z which is perpendicular to both the first direction X and the second direction Y may be detected.

For example, as shown in FIG. 12, the conduction-path-equipped member (the plate material 300) may be utilized as a connecting plate when fastened to a steel material by bolts. Thus, more various stresses may be measured by disposing a plurality of such plate materials 300 in various directions.

Further, the conduction-path-equipped member is not limited to the member in the above embodiments. Hereinafter, the member to which the present invention is applicable will be suggested in various aspects. In addition, it is obvious that the application of the present invention is not limited to the member suggested herein, and the present invention is also applicable other members.

### <Suggestion of member in aspect of material>

A material of the member includes metal and non-metal. The metal includes pure substances, such as aluminium, copper, silver, gold, iron, nickel, tungsten, titan, and zinc, or compounds or mixtures thereof, for example, alloys such as brass, stainless steel, and a magnesium alloy. The non-metal includes wood, plastic, paper, flame-retarded wood, plywood, glass, ceramics, pottery, porcelain, rubber, natural resin, synthetic resin, concrete, and asphalt, and composite materials thereof.

Ferrous metal includes steel (carbon content<0.02%) and cast iron (carbon content>2.14%). The steel includes common steel such as rolled steel for general structures (SS), rolled steel for welding structures (SM), or cold rolled steel (SPCC), and special steel such as alloy steel for machine structural use, tool steel, or special purpose steel. The alloy steel for machine structural use includes alloy steel such as chrome steel (SCr) or nickel chrome steel (SNC). The tool steel includes carbon tool steel (SK), alloy tool steel (SKD), and high speed tool steel (SKH). The special purpose steel includes low alloy spring steel (SUP), beaing steel (SUJ), free-cutting steel (SUM), high alloy stainless steel (SUS), heat resistant steel (SUH), and high manganese steel. The cast iron includes gray cast iron (FC) and nodular graphite cast iron (FCD).

Nonferrous metal includes light metal such as aluminium, magnesium, sodium, potassium, calcium or lithium titanium, base metal such as copper, tin, zinc or lead, rare metal such as nickel, chromium, manganese, molybdenum, tungsten, bismuth, cadmium or cobalt, a rare earth element such as cerium, neodymium or praseodymium, precious metal such as gold, silver or platinum, and radioactive metal such as uranium or plutonium, and alloys thereof.

The wood includes camellia wood, tunnoki wood, camphor wood, fir wood, spruce wood, wood from other evergreens, maple wood, cherry tree wood, larch wood, beech wood, Mongolian oak wood, and wood from other deciduous trees, and further includes plywood, laminated wood, resin composite wood, and wood specially designed by resin reinforcement or flame retardance.

The plastic (synthetic resin) includes thermosetting resin such as phenolic resin (PF), epoxy resin (EP), melamine resin (MF), urea resin (UF), unsaturated polyester resin (UP), Alkyd resin, polyurethane (PUR), or thermosetting polyimide (PI), thermoplastic resion (general purpose plastic) such as polyethylene (PE), high density polyethylene (HDPE), medium density polyethylene (MDPE), low density polyethylene (LDPE), polypropylene (PP), polyvinyl chloride (PVC), polyvinylidene chloride, polystyrene (PS), polyvinyl acetate (PVAc), polyurethane (PUR), Teflon (registered trademark) (polytetrafluoroethylene (PTFE)), acrylonitrile butadiene styrene (ABS) resin, acrylonitrile-styrene (AS) resin or acrylic resin (PMMA), thermoplastic resin (engineering plastic) such as various types of nylon, that is, polyamide (PA), polyacetal (POM), polycarbonate (PC), modified polyphenylene ether (m-PPE, modified PPE, PPO), polyethylene terephthalate (PET), glass fiber reinforced polyethylene terephthalate (GF-PET), polyester including polybutylene terephthalate (PBT), or cyclic polyolefin (COP), and thermoplastic resin (super high-performance plastic) such as polyphenylene sulfide (PPS), polysulfone (PSF), polyether sulfone (PES), amorphous polyarylate (PAR), liquid crystal polymer (LCP), polyether ether ether ketone (PEEK), thermoplastic polyimide (PI) or polyamide imide (PAI), and so-called fiber-reinforced plastic (FRP) made by mixing reinforcing materials such as glass fiber, carbon fiber, silicon fiber, aramid fiber and metal fiber or various types of reinforcing materials.

The paper includes paper made of cannabis sativa, tapa-cloth-tree, gampi tree, paper mulberry, spindle tree, paper bush, bamboo, straw (rice straw or wheat straw), flax, cotton, Indian sugarcane, Manila flax, kenaf, banana, oil palm or other non-timber raw paper materials, paper made of broadleaf tree, needleleaf tree, wood chip, waste paper, recycled paper or other wood raw paper materials, and paper specially designed by resin reinforcement or flame retardance.

Flame-retarded materials include flame-retarded wood, flame-retarded plywood, a flame-retarded fiberboard, and a flame-retarded plastic plate. The plywood includes plywood for structure, plywood for concrete mold (concrete panel), common plywood, flame-retarded plywood, fancy plywood, and curved plywood.

The glass includes soda lime glass, potassium glass, crystal glass, quartz glass, polarizing glass, double glazing (eco glass), tempered glass, laminated glass, heat-resistant glass/borosilicate glass, bulletproof glass, glass fiber, so-called photocatalytic cleaning glass including a material formed by providing a titanium oxide layer on a surface or forming an ultrafine asperity structure or water glass, uranium glass, acrylic glass, dichromic glass, gold stone/red gold stone/bronze gold stone/blue gold stone, glass ceramics, low melting point glass, metallic glass, Saphiret, phase separation glass, porous glass, liquid glass, hybrid glass, organic glass, and lead glass.

The ceramics include element-based ceramics such as oxide-based ceramics, hydroxide-based ceramics, carbide-based ceramics, carbonate-based ceramics, nitride-based ceramics, halide-based ceramics or phosphate-based ceramics, and fine ceramics such as barium titanate, high-temperature superconducting ceramics, boron nitride, ferrite, lead zirconate titanate, aluminium oxide, silicon carbide, silicon nitride, steatite, zinc oxide or zirconium oxide.

The pottery includes earthenware, stoneware (for example, semiporcelain or high-fired unglazed ceramics), chinaware, porcelain.

Synthetic rubber includes an R-group (except for natural rubber) such as butadiene rubber (BR), styrene/butadiene rubber (SBR), chloroprene rubber (CR), nitrile rubber (NBR) or polyisobutylene (butyl rubber IIR), an M-group such as ethylene propylene rubber (EPM or EPDM), chlorosulfonated polyethylene (CSM), acrylic rubber (ACM) or fluororubber (FKM), an O-group such as epichlorohydrin rubber (CO or ECO), a U-group such as urethane rubber (U), and a Q-group such as silicone rubber.

The concrete includes normal concrete, high strength concrete, early strength concrete, shielding concrete, light weight concrete, greening concrete, watertight concrete, and reinforced concrete. The reinforced concrete includes reinforced concrete, bamboo-reinforced concrete, concrete filled tube (CFT), steel fiber reinforced concrete (SFRC), Glass fiber reinforced concrete (GFRC or GRC), carbon fiber reinforced carbon (CFRC), and so-called ancient concrete represented by Roman concrete.

The asphalt includes straight asphalt, blown asphalt, asphalt for waterproofing construction, and modified asphalt for paving.

### <Suggestion of member in aspect of purpose>

Purposes of the member include a vehicle (means of transportation), a construction (edifice), and machinery such as home appliance, an agricultural machine, a construction machine (including a general construction machine or a special construction machine) or a machine tool.

The vehicle or a moving object includes a manned or unmanned moving object, and includes a multiwheel vehicle and a wheelless vehicle to be used on land. The multiwheel vehicle with at least four wheels includes a truck, a bus, a fire truck, a ladder truck, a pump car, a trailer, a tank lorry, a mixer car, a crane car, a road sweeper, a vacuum car, a towing car, a truck with a snowplow, a train, a monorail, Shinkansen, a tram, a locomotive, a cable car, an armored car, and a tank. A four-wheeled vehicle includes a car, a patrol car, an ambulance, and a camper van. A three-wheeled vehicle includes a tricycle and a motorized tricycle. A two-wheeled vehicle includes a motorcycle, a scooter, a bicycle, an electric assist bicycle, a wheelchair, a stroller, and a rickshaw. A one-wheeled vehicle includes a one-wheeled car. The wheelless vehicle includes a linear motor car, a hovercraft, an elevator, an escalator, a lift, a gondola, a ropeway, a Ferris wheel, a merry-go-round, a swing, and a seesaw. Other vehicles with wheels include a wheel loader, a tire roller, a road roller, a grader, an asphalt finisher, a motor sweeper, a dump truck, a wheel crane, a forklift, a straddle carrier, a turret type interior carrier, an agricultural tractor, an agrochemical spraying car, a reaping and threshing car, a rice planting machine, a combine, an excavator, a backhoe, a loading shovel, a snowmobile, roller skaters, roller shoes, a skateboard, a kickboard, skis, a snowboard, and skate shoes. A flight vehicle or a moving object includes, irrespective of a manned flight or an unmanned flight, a light aircraft such as a balloon or an airship, and a heavy aircraft such as an airplane, a rotary wing airplane, a glider, a helicopter, a drone, a rocket or a vertical takeoff and landing machine. A marine vehicle includes a ship, a boat, a yacht, a ferry, a passenger ship, a cargo-passenger ship, a cargo ship, an oil tanker, a fishing boat, a warship, and a submarine. Further, components used for the vehicle include a monocoque, a body shell, a bonnet, a door, a tailgate, a front fender, a radiator grill, a bumper, a meter, a heater, a windshield glass, a door window glass, an engine, a radiator, a muffler, a brake pedal, an accelerator pedal, a clutch pedal, a seat, an exhaust pipe, a tail lamp, a headlamp, a wheel, a tire, a track, a propeller, a tank, a cylinder, a piston, an actuator, a damper, a linear guide, a bearing, a chassis, and a shaft.

The construction includes a structure and a civil engineering construction (workpiece). The structure includes housing, a commercial facility, a public facility, a cultural facility, an educational facility, a medical facility, an entertainment facility, a transportation facility, an industrial facility, a religious facility, a military facility, and a plant facility. The structure also includes a detached house, an attached house (terrace house), an apartment, a multi-unit dwelling, a share house, an office building, a church, a monastery, a temple, a shrine, a castle, a palace, an imperial palace, a garden, a park, a hospital, a clinic, a station, a station building, an airport, a public lodging house, a public office building, a police station, a fire station, a precinct station, a stadium, a ballpark, a schoolyard, a swimming pool, a school, a gymnasium, a theater, a cinema, a performance hall, an art center, a concert hall, a public hall, an meeting hall, a hotel, an inn, a factory, a storehouse, a warehouse, a boarding house, a dormitory, a child welfare facility, a midwifery office, a disabled person rehabilitation support facility, a mentally disabled person social rehabilitation facility, a protection facility, a women's protection facility, an intellectually handicapped person support facility, a senior citizen welfare facility, a pay nursing home, a special support nursing home, a day service center, a maternal and child health facility, a cinema, a museum, an art gallery, a library, a public restroom, a sport practice ground, a bowling alley, a sky resort, a department, a supermarket, a general store, an exhibition hall, a cabaret, a café, a nightclub, a bar, a dancing hall, a playground, a public bathhouse, a waiting room, a restaurant, a bistro, a shop, a garage, a car repair shop, a movie studio, and a television studio.

The civil engineering construction (workpiece) includes a bridge, a metal structure, a railroad, a road, a harbor, a coast, a river, a power generation facility or generating unit, a dam, a tunnel, a land improvement construction, a disaster prevention construction, and an agricultural civil engineering construction. The bridge includes a girder bridge, a cable-stayed bridge, a truss bridge, an arch bridge, a rigid frame bridge, and a suspension bridge. The metal structure includes a tower-like structure, a storage structure, a sluice/floodgate, a hydraulic iron pipe, a composite structure, a water supply facility, sewerage, and various types of pipelines including an object to be delivered such as gas or petroleum. The railroad includes a track, a track structure, a roadbed, a railroad station, a signalling/security/communication facility, a high-speed railway, a special railway, a cableway, and a city railroad. The road includes a roadbed, a pavement, an asphalt pavement, a concrete pavement, a gravel road, and a dustproof road. The harbor includes an anchorage, a breakwater, a revetment, a jetty, a wharf, a quay, a pier, a shed, a cargo handling/land facility, a ship and car communication facility, a fishing port, and a navigation aid. The coast includes a coastal structure. The river includes an embankment/revetment, a sand arrestation, a river structure, and a canal. The power generation facility or generating unit includes a water intake facility, a reservoir, a regulating reservoir, a nuclear power plant, a thermal power plant, a hydroelectric power plant, a tidal power generation, a geothermal power generation, a wave power generation, and a wind power generation. The dam includes a gravity dam, a fill-type dam, and an arch dam. The tunnel includes a tunnel structure. The land improvement construction includes a land formation, a reclamation, a dredging, an irrigation, a drainage, a reclamation, and mixing of soils.

Further, members used for the construction include stone including natural stone, artificial stone, and crushed stone, wood, a precut material, natural wood, machine grade wood, visual grade wood, ungraded wood, a class-A structural material, a class-B structural material, laminated wood, engineering wood, structural laminated wood, plywood, a wooden product, a resin product, a steel product, a steel material, a steel sheet, a steel frame, an organic material, a coating material, a waterproof material, a cement paste, slag, mortar, concrete, a tile, a porcelain tile, a stoneware tile, a pottery tile, a tatami mat, lightweight aerated concrete, a concrete panel, water resistant plywood, a gypsum board, a fireproof board, a calcium silicate board, a thermal insulation material, glass wool, rock wool, rigid urethane foam, Styrofoam, phenol foam, polystyrene foam, cellulose fiber, prestressed concrete, precast concrete, underwater concrete, polymer concrete, resin concrete, mass concrete, expanded concrete, low shrinkage concrete, and shrinkage-free concrete.

Parts of the construction include a structural material, a fastening member, a finishing material, a groundsill, an interior material, an exterior material, a facing material, a thermal insulation material, a base, a foundation, a wall, a pillar (column), a tubular column, a corner post, a splash post, a major pillar, a roof beam, a dragon beam, a round beam, an ascending beam, a roof, a ceiling, a floor, stairs, a puncheon, a vertical roof puncheon, a window, window glass, a window frame, a door, a door frame, a front door, a shelf, a baseboard, a doorcase, an upper frame of doorcase, a decorative pillar, an alcove, a decorated rail of alcove, a floor board of alcove, an alcove post, a transom, a lintel, an attached lintel, a girth, a dragon beam, a braced frame, a crosspiece, a stud, a puncheon, an eaves, an eaves soffit, a ceiling joist, an awning, a gutter, a flooring, a carpet, a cushion floor, cloth, wallpaper, a sliding door, door paper, a siding, an expansion joint, a roof tile, a cement roof tile, a slate roof tile, a colonial, a corrugated steel plate, and a handrail.

An architecture that implements each member of the construction includes masonry, a brick structure, a wooden structure, a wood structure, a soil structure, a steel structure (S structure), a light gauge steel (LGS) structure, a heavy steel structure, a plain concrete structure, a reinforced concrete (RC) structure, a steel frame reinforced concrete (SRC) structure, a concrete filled steel tube structure, a cement block (CB) structure, a reinforced CB structure, a steel concrete composite structure, a prestressed concrete (PC) structure, a membrane structure, a wall structure, a frame structure, a masonry structure, a pneumatic structure (single-layer film), a pneumatic structure (dual-layer film), a pneumatic structure (air beam), a pure rigid frame structure, a walled rigid frame, a streaked rigid frame, a brace structure, a core structure, a tube structure, a truss structure, a bolt structure, a shell structure, a cable (hanging) structure, a pin structure, a space frame, an arch, a dome shell, an earthquake resistant structure, a base isolation structure, a vibration damping structure, a rigid structure, a flexible structure, and an earthquake-proof structure.

Method of constructing the construction include a masonry type method, a framework type method, a panel type method, a wood panel constructing method, a suspended type method, a framework structure constructing method, a log group constructing method, a heavy steel frame structure, a lightweight steel frame structure, a planar truss, and a cubic truss.

Forms of the construction include a one-story house, a low-rise house, a middle-rise house, a high-rise house, a super-high-rise house, and a tower.

The home appliances include video equipment (displaying device) such as a television or a projector, video equipment (recording/replaying device) such as a video tape recorder, a digital video disc (DVD) recorder, a Blueray disc recorder, a hard disk drive (HDD) recorder, a DVD player or a Blueray disc player, video equipment (capturing device) such as a video camera or a digital camera, acoustic equipment (recording/replaying device) such as a wire recorder, a tape recorder, a minidisc recorder, a radio cassette player or an IC recorder, acoustic equipment (replaying device) such as an analog player, a compact disk (CD) player, an amplifier or a radio, acoustic equipment (reproducing device) such as a speaker or a headphone, white goods (refrigerator and washing machine), and information appliances.

Electronic products including the so-called white goods (refrigerator and washing machine) include a washing machine, a cleaner an iron, a sewing machine, a blanket dryer, a pill remover, a cloth dryer, a hanger steamer, a pants presser, a shoes dryer, a towel heater, a sewing iron, an oven range/microwave oven, a cooker, a mixer/food processor, a gas table/cooking stove, a toaster, an IH cooker, a hot plate/grill pot, a home bakery/baking tool, a table cooking utensil, a water heater, a fryer, an electric pressure cooker/electric boiling pot, a fish roaster, a steam cooker, a soup maker.soy milk maker, a rice cake machine, a dehydrated food maker, a fridge/freezer, a kettle/pot, a coffee maker, a water purifier, a dish washer, a dish dryer, a carbonated water maker, a water purifier, a tea maker, a household waste processor, a capsule tea machine, a towel steamer/heating cabinet, a heater, an air cleaner, an air conditioner, a humidifier, a dehumidifier, an electric fan, an iron generator, a circulator, a bathroom dryer, a cool air fan, a dryer, a hair iron, an electric hair trimmer, an electric shaver, a hair iron, an electric facial device, a microscope, an electric tooth brush, an oral cleaner, a stain cleaner, an alcohol checker, a breath checker, an epilator, a light epilator, a laser epilator, a high frequency epilator, an electric keratin remover, a desk lamp, a porch lamp, a ceiling lighting, an interior lamp, a spotlight, a slide lighting, a ceiling fan, a chandelier, a facility/outdoor lighting, a bathroom lighting, a down light, a black light, a bracket light, a foot light, a garden light, a leading light, massaging equipment, a health care/measurement, a warm water washing toilet seat, an electric/low-frequency therapeutic device, a hearing aid, an electronic cigarette, an inhaler, a nose cleaner, an oxygen air charger, a home ultraviolet therapeutic device, a bulb/fluorescent lamp, an LED bulb, a straight tube fluorescent lamp, a bulb type fluorescent lamp, an incandescent lamp, a fluorescent circle lamp (FCL), an LED fluorescent lamp, a round slim fluorescent lamp (FHC), a compact fluorescent lamp, a halogen bulb, a starter lamp (glow ball)), a dual round fluorescent lamp (FHD), a miniature light bulb, an electronic starter lamp, a high-intensity discharge (HID) lamp, a light bulb base mold, a slim fluorescent lamp (EFC), a rectangular slim fluorescent lamp (FHG), a warming lamp, a telephone/facsimile, a telephone, a facsimile, a multifunction facsimile, an expansion cordless handset, an LED lamp with a motion sensor, and a general lamp (LED lamp).

The information appliances include a personal computer, a display, a keyboard, a mouse, a printer, a three-dimensional (3D) printer, a tablet, a universal serial bus (USB) memory, a removable HDD, a card reader, a facsimile, a mobile phone, a smart phone, a portable game console, a home game console, and an educational toy.

The agricultural machine includes a general purpose agricultural machine such as a tractor, an agricultural machine used for cultivation/soil preparation such as a plough, a harrow, a roller, a rotary cultivator, a puddling machine, a land roller, a leveller, a ridger or a slitting machine, an agricultural machine used for cultivation/formation/improvement such as a rooting machine, a pan breaker, a grooving machine, a mold rina (culvert drilling machine), a digger or a backhoe, a machine used for fertilization such as a manure spreader (compost fertilizer distributor), a slurry spreader, a lime sower (lime distributor), a planter (seeder) or a drill seeder with fertilizer, an agricultural machine used for sowing/transplanting such as a rice transplanter, a vegetable transplanter, a transplanter (transplanting machine) or a broadcaster, an agricultural machine used for control and management such as a sprayer a motor sprayer, a mist machine, a duster, a motor duster, a granule applicator, a motor granule applicator, a haze machine, an aerial sprayer/helicopter (air control), a soil sterilizer, a brush cutter, a farm master, a speed sprayer, a frost damage protection machine, a medium cultivating and weeding machine, a thinner (thinning machine), a motor pump or a sprinkler (irrigator), an agricultural machine used for harvest such as a binder, a combine, a vegetable reaping machine, a mower, a hay baler, a roll baler, a windrower, a thresher, a bean cutter (bean harvester), a corn harvester, a corn sheller, a potato harvester, a beet harvester, a sweet potato digging machine, a sweet potato vine cutter, a sugarcane harvester, a peanut harvester, a flax harvester, an onion digging machine, a chestnut thresher, a peanut thresher, a plucker, a mulberry shoot reaping machine, a special purpose crop digging machine, a vibrating harvester or a hop flower thinning machine, an agricultural machine used for drying and preparing crops such as a drying machine, a rice harvester (rice huller), a sorting machine, a rice milling machine, a grass dryer, a chicken droplet dryer, a special purpose crop dryer, a grain milling machine, a disc mower, a mower conditioner, a tedder, a rake, a forage harvester, a hay baler, a hay press, a road wagon, a hay loader, a bale loader, a feed cutter, a forage blower, a silage unloader, a feed grinder, a feed chopper, a root cutter, a feed compounder or a feed molding machine, an agricultural machine used for managing livestock such as an automatic feeder, a milker, a milk cooler, a waterer, a water heater, a slurry spreader, a barn cleaner, a sludge separator, an excretion processing device, a warmer, an egg lifter, a sorting machine for cleaned eggs or a barn sterilizer, an agricultural machine used for rearing silkworms such as a young silkworm co-rearing temperature control device, a power mulberry feeder, an automatic rearing machine for young silkworms, an automatic rearing machine for grown silkworms, a delimbing machine, a cocoon harvesting machine or a floss removing machine, an agricultural machine used for vegetable/fruit growing such as a mulcher, a crucific cultivating machine, a house heater, a vegetable washer, a deep placement fertilizer applicator, a motor trimmer, a tree tower, a rotary cutter for orchard, a fruit sorting machine, a container in arboricultural land or a power tiller, an agricultural machine used for tea production such as a tea steaming machine, a primary drying tea roller, a freshly-picked-tea-leaves rolling machine, a secondary drying tea roller or a final drying tea roller, an agricultural machine used for flowering/special purpose crop such as a pruning machine, a ramie peeler, a rush classifier, a tulip classifier or a peanut peeler, an agricultural machine used for forestry such as a bush cutter, a chain saw or a yader, and an agricultural machine used for transporting/conveyance such as a trailer, a grain conveyor or a front loader.

The general construction machine includes a bulldozer/scraper such as a bulldozer, a ripper bulldozer (bulldozer with rip saw), a scraper bulldozer, a towed scraper or a motor scraper, a backhoe/mucking shovel such as a hydraulic shovel (Yunbo), a backhoe, a power shovel, a dragline, a clamshell, an on-mud excavator, a tractor shovel, a wheel loader, a trencher or a bucket wheel excavator, a conveying machine such as a truck, a dump truck, a truck with a crane device, a trailer, a locomotive, a muck car, a shuttle car, a rough terrain hauler (special equipment hauler), a shovel loader, a fork loader, an all wheel drive vehicle, a belt conveyor or a bucket wheel excavator, a crane/unloading machine such as a crawler crane, a truck crane, a wheel crane (all terrain crane), a rough terrain crane, a tower crane, a jib crane, a railroad crane, a floating crane, a pipe layer, a construction lift, an elevator, a portal crane, a fork lift, a straddle carrier, a container carrier, a top lifter, a clamp lift, an aerial vehicle (lift vehicle), a concrete floor finishing robot, a slinging excluding robot or an unloader, a foundation work machine such as a pile driver, a diesel hammer, a hydraulic hammer, a vibratory hammer, a water jet (water jet cutter), an earth auger, an inner excavator of earth auger, a drop hammer, a hydraulic steel pipe press-in and drawing machine, a sand pile driver, a powder injection agitator, an all casing backhoe, a hole digging and pole standing car, an earth drill, a reverse circulation drill, an underground continuous wall construction machine, a mud wastewater treatment facility (alkaline water neutralizer), a sludge suction and discharge vehicle (including vacuum car), a grout pump, a grout mixer (including mortar plant), pneumatic caisson construction equipment, a deep mixing processing machine, a ground improvement machine for high pressure injection stirring, chemical liquid injection and construction equipment, a caisson pile machine (rotary sprayer or underwater cutter) or a pile extractor, a perforator/tunnel construction machine such as a boring machine, a down-the-hole hammer, a rock borer (hand hammer, leg hammer, drifter, pick hammer, baby hammer, riveting hammer, chipping hammer, caulking hammer, scaling hammer, sand rammer, concrete breaker or large breaker), a drill jumbo, a crawler drill, a tunnel backhoe/cutter, a grab hopper, a grab lifter, tunnel construction equipment or shield construction equipment, a motor grader/sub-basics machine such as a motor grader, a stabilizer, a mixing plant or a mixing machine for super soft ground, compacting equipment such as a road roller (macadam roller or tandem roller), a tire roller, a tamping roller, a vibrating roller, a tamper, a rammer or a vibrating compactor, a concrete plant, a truck mixer (agitator body truck), a concrete pump car, a concrete pump, a concrete presser, a screw cleat, an agitator car or a concrete crusher, a paving machine such as an asphalt plant, a recycle plant, an asphalt finisher, an asphalt kettle, a distributor, a chip spreader, an asphalt cooker, a concrete spreader, a concrete finisher, a concrete leveler (concrete vertical finishing machine), a concrete simple finishing machine, a concrete lateral yarding machine, a vibrating joint cutting machine, a concrete cutter, an inner vibrator, an asphalt engine sprayer, an asphalt curbing machine, a joint sealer, a play susceptor, slip form paper or food preservation treatment machine, a pavement maintaining machine such as a road heater, a joint cleaner, a road cleaning car, a line maker, a dissolving tank, a lane marker removal machine, a road surface cutting machine, a road surface layer regenerating machine, a guardrail cleaning car, a road surface safety groove cutting machine (grooving machine), a sprinkler truck, a guardrail pole drive machine, a compartment line construction machine, a slab upper surface thickening machine, a micro surface machine or a drainage pavement function recovery machine, an air compressor/air blower such as an air compressor (pressure) or an air blower (fan), a pump such as a small spiral pump, a small multistage centrifugal pump (turbine pump), a underwater motor pump for deep well, a vacuum pump, an underwater motor pump for construction (diving pump), an underwater sand pump (underwater pump for construction with stirring device) or a slurry pump, an electric device such as a transformer, a switch in high pressure air, a cubicle type high voltage substation facility or a motor generator, a winch such as a winch, a hoist or a chain block, test measurement equipment such as a track scale, a gauge, a core collector (core boring machine), a California bearing ratio (CBR) tester, a flat loading test apparatus, a grout flux/pressure measuring device, a gas detector, a noise meter, vibration measuring equipment, settling/inclination measuring equipment, a dust monitor, a nephelometer, an automatic surveying instrument or a light wave measuring device, a temporary facilities apparatus for installing a steel bridge/PC bridge such as an erected girder, a bentgrass, a door type crane, a hoist, a chain block, a geared trolley, a winch, a jack, a hydraulic pump, a bogie for heavy weight, a delivery device, an steel tower, a carrier, a saddle, a back stay adjusting device, a cable anchoring device, a turn buckle, a rope hanger, an unreeler, a delivery device, a lateral yarding machine, a falling device, a traveler crane, a girder hanging device, a girder hanging gate preparation moving device, a turn table, a moving timber or a working car of ground cover and handrail, and other general land construction machines such as a concrete mixer, an aggregate measuring instrument, a concrete bucket, a concrete vibrator, a concrete crusher, a jaw crusher, an impact crusher, a welder, a welding rod dryer, a hydraulic jack, a drop hammer, a rail, a turn table, a mortar concrete spray machine, a concrete spray machine, an accelerating agent supply device, a seed spray machine, a Bentonite mixer, a water tank, a bush cutter, a lawn mower, a chain saw, a float, a construction signal, a construction high pressure washer, a chemical applicator, a hay collector, a jet heater, a garbage truck, a self-propelled crusher, a self-propelled soil improver or a self-propelled wood crusher.

Further, the present invention is also applicable to a special construction machine, and the special construction machine includes a harbor/river/coast construction machine such as a main working ship, an auxiliary working ship, an auxiliary facility for working ship or auxiliary equipment for harbor construction, a dam construction machine such as a concrete production facility, a concrete conveyance facility, a concrete cooling facility, an aggregate production facility, a cement conveyance/storage facility, a watering facility, a pollution prevention facility or other dam construction machines, a snow removal machine such as a snowmobile, a snow removal device, a snow removal attachment or a salt truck, a sewerage construction machine such as a propulsion construction machine, and a mine clearing machine.

The machine tool includes a lathe such as a general purpose or NC turret lathe, a milling machine using a milling cutter or an end mill, a shaping machine using a bite, a planing machine using a bite, a drilling machine using a drill, a reamer or a tap, a boring machine using a bite, an electric discharge machine such as a wire cut electric discharge machine or an engraving electric discharge machine, a broaching machine using a broach, a gear hobbing machine (hob), a gear cutting machine such as a gear shaper (rack cutter or pinion cutter), a grinder using whetstone, a contour machine, a band sawing machine, a machining center, a water jet processor, a laser processor, an electronic beam processor, a honing machine, an electrochemical machine, a deburring chamfering machine, an electrochemical deburring machining, and a cutting machine.

In addition, general purposes of the member include a structural material of a building, a structural material of an edifice, an exterior material, an interior material, a propeller of wind power generation, a solar-cell panel, a cylinder, a piston, an actuator, a damper, a linear guide, a bearing, an engine block, a chassis, a shaft, a rod, an L-shaped metal fitting, a curtain, a roll curtain, a banister/grid/chassis of veranda/balcony/bay window, a handrail of a corridor, a passage, stairs, a bed side, or an inner wall of a bathroom, a chair, a desk, a bookcase, a cupboard, a bed, a bathtub, a toilet seat, and a toilet.

### <Suggestion of member in aspect of shape>

The member is provided in various shapes. For example, the steel material includes octagonal bar steel, hexagonal bar steel, flat steel, square steel, round steel, a wiring rod, unequal angle steel, a flat-type steel sheet pile, a U-shaped steel sheet pile, equal angle steel, channel shaped steel, I-shaped steel, H-shaped steel, a rail including a rail for railroad or a curtain rail, and a steel pipe.

Further, shapes not limited to the steel material include a propeller, a H-shaped cross section, a whole shape, a cross-sectional shape, a ring shape, an angular ring shape, a cicular tube shape, an angular tube shape, a spherical shape, a cube, a rectangular parallelepiped, a plate shape, a sheet shape, a tube, a soft tube, a hard tube, a spiral shape, a planar spiral shape (spiral shape), a cuboid spiral shape (coil form), a porous shape, a soft porous shape, a hard porous shape, a cone, a pyramid, and a horn shape.

### <Suggestion of member in aspect of general name including preparation method or shape>

For example, general names of the steel material include a steel plate such as a thin steel plate (thickness less than 3 mm) or a thick steel plate (thickness greater than or equal to 3 mm), a steel pipe such as an electric resistance welding steel pipe, a forge welding steel pipe, a seamless steel pipe, a spiral steel pipe, a UOE steel pipe (= large-sized welded steel pipe) or a straight seam steel pipe, shape steel such as H-shaped steel, angle steel, I-shaped steel, U-shaped steel, a steel sheet pile, a rail, lightweight shape steel, a deck plate or a lightweight steel sheet pile, bar steel such as round bar steel, square bar steel, hexagon bar steel, octagon bar steel, flat steel or deformed bar steel, a wire such as a soft steel wire, a hard steel wire, a piano wire or a special wire, and a cast forged steel product such as a casting steel product provided in a desired shape by injecting steel into a mold or a forged steel product provided by forging a steel ingot or a steel billet to have an appropriate forging ratio and performing thermal treatment to provide a typical, predetermined mechanical property.

Further, general names not limited to the steel material include a roof tile, a pillar (post), a girder (beam), a tile, a window, a door, a gate, a sliding door, a fixture, a screw or propeller, various blades including an impeller, a wheel, a lean hose, a bonnet, wallpaper, a shelf, a table, H-steel, a chimney, and steps.

Hereinafter, the conduction path formed directly in the member will be described in detail. Further, the applications of the present invention are not limited to the examples suggested herein.

### <Positions at which conduction path is formed>

Positions at which the conduction path is formed in the member are a surface, a back surface, both an outer surface and an inner surface, a side, and a circumferential surface of the member. The member including an inner space is provided on one or both of an inner circumferential surface and an outer circumferential surface of the member. Further, in a case in which a recess or a hole is present in a body of the member, the conduction path may also be formed in the body of the member by stacking a conductive material in the recess or the hole or filling the recess or the hole with the conductive material.

### <Layer state of conduction path>

A layer state of the conduction path is not limited to the single layer of FIG. 3 and the like, or the two layers of FIG. 5D, and a multilayer structure including at least three layers may be employed. When the conduction path is provided in a stacked structure including a plurality of layers, an electric insulation material is interposed therebetween as an intermediate layer. A protection layer may be formed on an outermost conduction path.

### <Shape of conduction path>

The shape of the conduction path include a linear shape such as a straight line or a curved line, a planer shape such as a plane or a curved surface, and a cubic shape (including both a hollow shape or a solid shape) formed by combining a plurality of planes or curved surfaces, or other surfaces. The planar conduction path includes, in addition to a conduction path provided in a planar shape, a conduction path provided in a substantially planar shape by disposing a linear wiring to disperse in a planar/curved region or stacking the linear wiring, like a zigzag shape, a matrix shape, a grid shape, or a spiral shape. The planar conduction path may also be provided in a shape of curved surface by the whole or a portion of a surface of a round column, the whole or a portion of a surface of a circular cone, or the whole or a portion of a surface of a sphere. The shape of the planar conduction path may include a ring shape, a cylindrical shape (inner circumferential surface, outer circumferential surface), a square shape, a polygonal shape, a circular or elliptical shape, a heteromorphic shape, and a combination thereof.

### <Number of conduction paths>

A single conduction path or a plurality of conduction paths is disposed. Further, as a pattern to dispose a plurality of planar conduction paths, the plurality of conduction paths may be arranged along a straight line, the plurality of conduction paths may be arranged along a curved line (including a circle), the plurality of conduction paths may be arranged along a spiral line, the plurality of conduction paths may be disposed in a shape of matrices/grids, the plurality of conduction paths may be disposed in multiple layers, or the plurality of conduction paths may be disposed three-dimensionally. Further, in a case in which the conduction path is provided in a ring shape, the plurality of conduction paths may be disposed concentrically. Similarly, by disposing a plurality of strands in a parallel state or a stacking state, the plurality of conduction paths may be disposed adjacent thereto.

### <Material of conduction path>

The material of the conduction path includes a material mainly containing aluminium, copper, silver, gold, platinum, iron, and carbon and/or a composite material thereof, or a material not containing the same as a main component. In addition, the conduction path or an insulation layer may be formed by film forming such as PVC or CVD, and includes, for example, an oxide thin film, a fluoride thin film, a nitride film, and a carbonized film. The oxide thin film includes aluminium oxide or alumina (A12O3), cerium oxide (CeO2), chromium oxide (Cr2O3), gallium oxide (Ga2O3), hafnium oxide or hafnia (HfO2), nickel oxide (NiO), magnesium oxide or magnesia (MgO), indium tin oxide (I.T.O) (In2O3+SnO2), niobium pentoxide (Nb2O5), tantalum pentoxide (Ta2O5), yttrium oxide or yttria (Y2O3), tungsten oxide (WO3), titanium monoxide (TiO), titanium pentoxide (Ti3O5 titanium dioxide or titania (TiO2), zinc oxide (ZnO), compound oxide (ZrO2+TiO2), and zirconium dioxide or zirconia (ZrO2).

The fluoride thin film includes aluminium fluoride (AlF3), calcium fluoride (CaF2), cerium fluoride (CeF3), lanthanum fluoride (LaF3), lithium fluoride (LiF), sodium fluoride (NaF), magnesium fluoride (MgF2), neodym fluoride (NdF3), samarium fluoride (SmF3), ytterbium fluoride (YbF3), yttrium fluoride (YF3), and gadolinium fluoride (GdF3).

The nitride film includes titanium nitride (TiN), chromium nitride (CrN), titanium carbo-nitride (TiCN), titanium aluminium nitride (TiAlN), boron nitride (BN), aluminium nitride (AlN), carbon nitride (CN), and boron carbon nitride (BCN).

The carbonized film includes diamond-like carbon (DLC), titanium carbide (TiC), silicon carbide (SiC), boron carbide (BC), and tungsten carbide (WC).

In addition, indium zinc oxide (iZO), graphene, polyacetylene, and tin dioxide (SnO2) are also used.

A color of the conduction path includes transparent color, opaque color, translucent color, white color, black color, and red color. In a case in which the member includes transparent or translucent glass, the conduction path may also be transparent or translucent.

### <Function of conduction path>

Sensing functions implemented by the conduction path include machine quantity measurement, thermal/temperature measurement, light/radiation measurement, electrical measurement, magnetic measurement, and chemical measurement. The machine quantity measurement includes an acceleration measured by an acceleration sensor, a force measured by a strain gauge, a load cell or a semiconductor pressure sensor, and a vibration measured by a sound wave (microphone) or an ultrasonic wave. The thermal/temperature measurement includes contact-type sensing performed by a thermistor, a resistance thermometer or a thermocouple (in this example, it may be implemented by forming junctions on both ends of the conduction path having different electrical conductivities, one as a hot junction and the other as a cold junction), and noncontact type sensing performed by a radiation thermometer. The light/radiation measurement includes light detection performed by a light sensor, a photoelectric device or a photodiode, infrared detection, and radiation detection. The electrical measurement includes an electrical field, a current, a voltage, and an electric power. The magnetic measurement includes a magnetic sensor. The chemical measurement includes smell detection, ion concentration detection, and gas concentration detection.

Further, sensors implemented by the conduction path include a clock sensor for time, a position sensor such as a position sensitive device (PSD) or a limit switch, a distance sensor such as an ultrasonic distance meter, a capacitive displacement sensor, optical distance measurement or electromagnetic wave distance measurement, a displacement sensor such as a differential trans or a linear encoder, a speed sensor such as a laser Doppler velocity measuring transducer or a laser Doppler hydrometer, a rotating angle sensor such as a potentiometer or a rotating angle sensor, a rotational speed sensor such as a tachogenerator or a rotary encoder, an angular velocity sensor such as a gyro sensor, a one-dimensional (1D) image linear image sensor, a two-dimensional (2D) image sensor such as a charge-coupled device (CCD) image sensor or a complementary metal-oxide-semiconductor (CMOS) image sensor, a liquid sensor such as a liquid leakage sensor (leak sensor) or a liquid detection sensor (level sensor), a hardness sensor, a humidity sensor, a flow sensor, an inclination sensor, and an earthquake sensor.

Further, a strain sensor implemented by the conduction path may be used for load measurement (load cell), displacement measurement, vibration measurement, acceleration measurement, torque measurement, torque measurement (transducer), pressure measurement, and Coriolis force measurement. In addition, environmental temperature may be measured from a change in an electric resistance of the conduction path. In this example, the conduction path may be used as a so-called resistance thermometer, a position that is hardly affected by thermal extension and contraction or deformation may be selected as a placement position of the parent material to which the corresponding conduction path is disposed.

For example, a material having a substantially zero thermal expansion coefficient in a predetermined limited temperature range, in detail, a perovskite-based material or a bismuth/lanthan/nickel oxide-based material, may also be used. Further, a combination of a material having a negative thermal expansion coefficient and a material having a positive thermal expansion coefficient of which an absolute value approximately equals to that of the negative thermal expansion coefficient, or a combination of materials configured to have zero thermal extension coefficients through nano-composition by combining a positive thermal expansion material and a negative thermal expansion material in a fine structure may also be used. In doing so, it is possible to distinguish between a change in an electric resistance of the conduction path due to a deformation of the parent material by an external force and a change in the electric resistance of the conduction path due to a change in the environmental temperature.

Further, a piezoelectric element may be disposed in the conduction path or on the parent material which is a different position from the conduction path, or a conduction path having a piezoelectric element structure may be installed. When the piezoelectric element or the conduction path having the piezoelectric element structure is installed in the conduction path, an external force applied to the piezoelectric element or the conduction path having the piezoelectric element structure may be sensed, or a piezoelectric current (electromotive force) generated in response to a change in pressure may be provided to operate the conduction path or a circuit. For example, the piezoelectric element or the conduction path having the piezoelectric element structure may be installed at a position held by the parent material and an external member, an electromotive force may be generated in the piezoelectric element in response to a change in a holding force thereof (for example, vibration), and the electromotive force may be utilized as power to sense the conduction path.

Similarly, a Peltier device or a conduction path having a Peltier device structure may also be installed in the conduction path or on the parent material which is a different position from the conduction path. When the Peltier device or the conduction path having the Peltier device structure is installed in the conduction path, a temperature difference may be generated in the parent material or between the parent material and an external member. For example, the Peltier device or the conduction path having the Peltier device structure may be installed and displaced at a position at which temperature may change easily, and a temperature difference generated at the position may be forcibly eliminated by conduction with respect to the Peltier device or the conduction path having the Peltier device structure. That is, at the position at which the temperature difference is generated, a heat absorbing part of the Peltier device or the conduction path having the Peltier device structure may be installed at a high temperature side of the position, and a heat emitting part may be installed on a low temperature side thereof. By supplying electricity to the Peltier device or the conduction path having the Peltier device structure, the original high temperature side may be cooled and simultaneously the low temperature side may be heated, whereby the temperature difference may be eliminated. However, when the high temperature side and the low temperature side are reversed, by reversing a conduction direction, the heat absorbing part and the heat emitting part may be alternated. Thus, by controlling the alternation, the temperature may be controlled to a desired temperature by heating or cooling an appropriate part. It may also be possible to heat the original high temperature side and cool the low temperature side. In addition, by installing a heat sink structure in the heat emitting part of the Peltier device or the conduction path having the Peltier device structure, heat dissipation may be improved. The conduction path having the Peltier device structure may be configured by connecting a PN junction formed by a P-type semiconductor and an N-type semiconductor in series, and installing a region by a set of junction parts with a conduction direction of N→P and a region by a set of junction parts with a conduction direction of P→N. For example, while forming or stacking various types of existing known semiconductor materials of the P-type semiconductor and the N-type semiconductor in an appropriate region, conductive materials such as metal of the N→P junction parts and the P→N junction parts may also be installed during the stacking process.

Next, a portion of members to which the present invention is applicable, including the above suggested member, will be described in an aspect of morphology. Further, a detection direction of a stress is indicated using an arrow with respect to the conduction path, and thus illustration of a detailed wiring structure will be omitted herein.

A conduction-path-equipped member 400A as shown in (A) of FIG. 13 includes a plurality of conduction paths 92 disposed in a circumferential direction and an axial direction with respect to a shaft member 410A having a rectangular, rhomboidal, or trapezoidal cross section. Detailed examples thereof include a screw, a column, a rail, a guide shaft, and wood.

A conduction-path-equipped member 400A as shown in (B) of FIG. 13 includes a plurality of conduction paths 92 disposed in a circumferential direction and an axial direction with respect to a shaft member 410A having a circular or elliptical cross section. Detailed examples thereof include a screw (seat surface, cylindrical part, peripheral surface of head part, surface of head part or groove of thread), a ball screw, various driving shafts including a motor shaft, a shaft member of a speed reducer or a speed increaser, a propeller shaft, a crankshaft, a piston shaft, an axle, various shaft elements, a shaft, a rod, various wires such as a wire, and wood in a rod shape.

A conduction-path-equipped member 400C as shown in (C) of FIG. 13 includes a plurality of conduction paths 92 disposed in a circumferential direction and an axial direction with respect to a rail member 410C having an I-shaped cross section. Such an elongated rail member may be stressed and fractured by a deformation or distortion while in use. Thus, a change in a state may be detected by the conduction paths 92. However, it is not limited to the example of the I-shaped cross section, and may also be applicable to H-shaped steel, C-shaped steel, or L-shaped steel.

A conduction-path-equipped member 500A as shown in (A) of FIG. 14 includes a plurality of conduction paths 92 disposed in a direction of a plane with respect to a flat plate material 510A which widens in the direction of the plane. Detailed examples thereof include a wall material including wallpaper, a floor material, a ceiling material, a body, a cover, a case, a rim, a container, a top board, a flat frame, a tile, a wood/plaster board, a window, a door, and a hinge plate. Further, although not shown particularly herein, a grating or punching metal with an opening in the plate material 510A may also be used as the conduction-path-equipped member. In addition, the shape of the plate material 510A is not limited particularly, and may include various shapes such as a rectangle, a circle, an oval, an ellipse, and a trapezoid. A circular plate material 510A may also be used as a valve element.

A conduction-path-equipped member 500B as shown in (B) of FIG. 14 includes a plurality of conduction paths 92 disposed in a direction of a plane with respect to a belt-shaped plate material 510B which widens in the direction of the plane. Detailed examples thereof include a flat spring and a shelf board in addition to the examples of (A) of FIG. 14.

A conduction-path-equipped member 500C as shown in (C) of FIG. 14 includes a plurality of conduction paths 92 disposed with respect to an L-shaped plate material 510C obtained by bending a flat plate to have an L-shaped cross section. In this example, the conduction paths 92 may also be disposed to extend across a bending line of the L-shaped plate material 510C. Detailed examples thereof include L-shaped steel, an L-shaped bracket, an L-shaped plate, and a stay.

A conduction-path-equipped member 500D as shown in (D) of FIG. 14 includes a plurality of conduction paths 92 disposed with respect to an L-shaped plate material 510C obtained by curving a flat plate. Detailed examples thereof include a fixture of a pipe or a column, a fixture of a gutter, and various stays.

A conduction-path-equipped member 600A as shown in (A) of FIG. 15 includes a plurality of conduction paths 92 disposed on an inner circumferential side and/or an outer circumferential side of a rectangular prismatic member 610A. Detailed examples thereof include rectangular tubing steel, a square pipe, and a pipe. Further, although not shown particularly herein, a member having an angled-C-shaped cross section by opening a portion of the member 610A may also be used. Detailed examples thereof include C-shaped steel, an irrigation channel, and a waste channel.

A conduction-path-equipped member 600B as shown in (B) of FIG. 15 includes a plurality of conduction paths 92 disposed on an inner circumferential side and/or an outer circumferential side of a cylindrical member 610B. Herein, in particular, a flange or a rim is formed, and conduction paths are also formed in the flange. Detailed examples thereof include a round pipe, a pipe (gas pipe or liquid pipe), a pipeline, a pressure vessel, a female screw, a sleeve, various hollow shafts, a cylinder, a body such as a rocket, a fuel tank, a gas tank, and a tire wheel.

A conduction-path-equipped member 700A as shown in (A) of FIG. 16 includes a plurality of conduction paths 92 disposed on an inner circumferential side and/or an outer circumferential side of a hollow or solid cubic member 710A. Detailed examples thereof include various containers including a pressure vessel, a case, and a block.

A conduction-path-equipped member 700B as shown in (B) of FIG. 16 includes a plurality of conduction paths 92 disposed on an inner circumferential side and/or an outer circumferential side of a hollow or solid spherical member 710B. The spherical member 710B may be disposed to measure a stress in a latitude direction and a longitude direction. Detailed examples thereof include a valve body, various balls, a capsule, and a gas tank.

A conduction-path-equipped member 800A as shown in (A) of FIG. 17 includes a plurality of conduction paths 92 disposed with respect to a member 810A having a rigidness that changes in response to a change in a cross-sectional area. In this example, the conduction paths 92 may be disposed at positions at which the rigidness or the cross-sectional area changes, or ordinary inflection points at which the rigidness or the cross-sectional area changes from decreasing to increasing or from increasing to decreasing. Detailed examples thereof include a vibrating horn, various stays, a column, and a frame.

A conduction-path-equipped member 800B as shown in (B) of FIG. 17, which is a detailed example of (A) of FIG. 17, includes conduction paths 92 disposed with respect to a member 810B having a variable cross section corresponding to a base of a wing of an impeller. A stress may be easily concentrated on the base of the wing, and thus a fracture of the base leads to a serious accident. Accordingly, by detecting a stress circumstance in advance, maintenance may be enabled.

Further, the detailed examples mentioned above are a portion of the present invention, and the present invention is also applicable to other members. For example, the other members include a seat surface, a cylindrical part, a peripheral surface of a head part, a surface of the head part, and a groove of a thread of a male screw, a seat surface, an outer circumferential surface, and a groove of a thread of a female screw, a seat surface of a washer, one having a single hole, one having a plurality of holes and to be fastened with a plurality of male screws, one having a slot, a hook, a steel reinforcement, concrete, wood (pillar or roof beam (beam)), stone (including marble or artificial marble), a turbine (including a blade), an engine, a rubber tube, a silicon tube, a surface of a wing of wind power generation or hydraulic power generation, a rotary shaft, a column, a reinforcement, and a structure frame.

Although a case of measuring a stress of a member using the conduction path 92 is illustrated herein, the present invention is not limited thereto. If the conduction path 92 changes together in response to a change in the member, and the change in the member is detected based on an electrical change in the conduction path 92, it may be used for other measurements. Detailed examples thereof may include a displacement (acceleration or rotation), a change in temperature, and a change in pressure of a surface.

Further, various materials may be selected for the conduction-path-equipped member, in addition to metal. For example, plastic or a composite material (carbon fiber reinforced plastic or silica fiber reinforced plastic) may also be selected.

### <Detailed examples of conduction path>

Hereinafter, the configuration of the conduction path formed on the surface of the member will be described further. The conduction path 92 may include a single material. However, the present invention is not limited thereto. For example, a conduction path 92 in (A) of FIG. 18 uses different materials for a detection region K that extends to reciprocate in one direction and for a wiring region H except for the same. For example, the wiring region H includes a good conductor material, and the detection region K includes a resistor material. In doing so, a variation in resistance is slight although the conduction path 92 in the wiring region H is deformed, and the variation in resistance increases when the conduction path 92 in the detection region K is deformed. Thus, a change in a member in the detection region K may be detected efficiently.

Further, in a case of detecting stresses of a plurality of directions, the first conduction path 93 configured to extend to reciprocate in the first direction, and the second conduction path 94 configured to extend to reciprocate in the second direction may be formed independently (separately). However, the present invention is not limited thereto. For example, a conduction path 92 as shown in (B) and (C) of FIG. 18 is formed such that the first conduction path 93 and the second conduction path 94 overlap. Further, the electric insulation layer 91 is interposed between the first conduction path 93 and the second conduction path 94. In doing so, a plurality of conduction paths may be formed in multiple directions to overlap in a narrow space.

Further, the conduction path 92 is not limited to a linear conduction path or a belt-shaped conduction path. For example, a conduction path 92 as shown in (A) and (B) of FIG. 19 has a structure including an electrode 95A of one direction, an electrode 95B of another direction, and a planar resistance wiring 95C provided in a shape of a circular plane. In detail, a pair of comb-tooth-shaped electrodes 95A and 95B is stacked on (or under) the planar resistance wiring 95C. The pair of comb-tooth-shaped electrodes 95A and 95B includes comb teeth that are alternately entered at predetermined intervals. The pair of electrodes 95A and 95B includes good conductors, and the planar resistance wiring 95C includes a conductor (resistor) having a higher resistance than the good conductors. Thus, when a voltage is applied between the pair of electrodes 95A and 95B, charged particles (in this example, electrons may be used. However, in a case of a semiconductor, a positive charge vacancy may also be used) move and currents flow through the planar resistance wiring 95C disposed therebetween.

When an external force is applied to the conduction path 92 in a direction of a plane such that the planar resistance wiring 95C is pressed, the planar resistance wiring 95C may extend as shown in a dotted line of (A) of FIG. 19, and thus an area of the planar resistance wiring 95C increases and simultaneously a thickness of the planar resistance wiring 95C decreases (changes from T0 to T) as shown in (C) of FIG. 19. At the same time, as shown in (B) and (C) of FIG. 19, a gap between the electrode 95A of one direction and the electrode 95B of another direction increases from d0 to d. Thus, a length of the planar resistance wiring 95C positioned between the electrode 95A of one direction and the electrode 95B of another direction increases and simultaneously the thickness thereof decreases, and thus a resistance thereof increases. By detecting the increase in the resistance, the external force applied to the conduction-path-equipped member may be detected.

As an application example thereof, as shown in a conduction path 92 of (A) and (B) of FIG. 20, the electrodes 95A and 95B may be disposed on both outer edges of the planar resistance wiring 95C, and a plurality of conductive parts (conductive pieces) 95D may be disposed on a surface of the planar resistance wiring 95C. Herein, the plurality of squire conductive parts 95D may be disposed at intervals on one surface of the planar resistance wiring 95C to widen in a direction of a plane (for example, in a shape of matrices or a honeycomb). The electrodes 95A and 95B are disposed at a total of four positions, in detail, one pair (A1, A2) in one direction, and one pair (B1, B2) in another direction.

When a voltage is applied to each of two pairs of electrodes 95A and 95B, electrons move and currents flow in the conductive parts 95D, and one surface layer of the planar resistance wiring 95C between adjacent conductive parts 95D that are a distance d0 apart from each other, as indicated by arrows of (B) of FIG. 20. Thus, the currents may flow restrictively on the one surface layer of the planar resistance wiring 95C.

When the conduction path 92 is curved in one direction such that one surface of the planar resistance wiring 95C grows as shown in (C) of FIG. 20, the distance between the adjacent conductive parts 95D increases from d0 to d. Thus, a resistance between the pair (A1, A2) of electrodes 95A and 95B in one direction may increase, and a state of being curved may be detected. Although not shown particularly herein, when the planar resistance wiring 95C is curved in another direction, a resistance between the pair (B1, B2) of electrodes 95A and 95B in the other direction increases. That is, in the present structure of the conduction path 92, extension and contraction or flexion in a plurality of directions may be detected simultaneously using an approximately two-layer structure.

Further, although an example of the square conductive parts 95D is illustrated, a polygon such as a triangle, a rectangle, a pentagon, a hexagon or an octagon, a circle such as an ellipse or a regular circle, and other various shapes may be employed. For example, in a case of hexagonal conductive parts 95D, the conductive parts 95D may be disposed in a shape of a so-called honeycomb as shown in (A) of FIG. 21. In this example, at least three pairs (A1, A2), (B1, B2), and (C1, C2) of electrodes may be disposed in a vicinity thereof to face each other. In addition, as shown in (B) of FIG. 21, like a so-called soccer ball, a combination of pentagonal and hexagonal conductive parts 95D may be disposed on a surface of a spherical planar resistance wiring 95C. Further, when the planar resistance wiring 95C is used as a semiconductor or an insulator, a change in capacitance between electrodes may also be detected.

Further, the present invention is not limited to a case of detecting an external stress using the conduction path 92. For example, as shown in FIG. 22, a first partial conduction path 92X having a first resistance may be connected to both ends of a second partial conduction path 92Y having a second resistance. One junction may be set as a hot junction T1, and the other junction may be set as a cold junction T2. Further, the present invention is not limited to a case of setting different resistances. The first partial conduction path 92X and the second partial conduction path 92Y having the second resistance may include different materials. When a temperature difference occurs between the hot junction T1 and the cold junction T2, a voltage V is generated between the hot junction T1 and the cold junction T2 and currents flow according to the so-called Seebeck effect. Thus, a change in temperature occurring in the conduction-path-equipped member may be sensed, or an electromotive force may be obtained using the conduction path 92.

Hereinafter, configurations of conduction circuits when forming a plurality of conduction paths 92 will be described with reference to FIGS. 23 through 27.

FIG. 23 illustrates a conduction circuit 201 formed in a conduction-path-equipped member 202. The conduction circuit 201 is configured by connecting a plurality of conduction paths 92 being electric resistors in parallel (see (a) of FIG. 23). In doing so, for example, when the conduction-path-equipped member 202 has a desired wide area like wallpaper or a plate, the plurality of conduction paths 92 may be disposed to be distributed, and thus a deformation around each conduction path 92 may be detected. Further, with respect to all the conduction paths 92, a voltage is applied from a pair (or a plurality of pairs) of good conductors being a common terminal A and a common terminal B, and thus a circuit configuration of the conduction circuit 201 may be simplified.

In this example, the conduction paths 92 are set to have resistances R1, R2, R3, and R4, respectively, and both ends of each of the four conduction paths 92 are connected to the terminal A and the terminal B via a good conductor. Further, the number of conduction paths 92 is not limited to "4", and may be any value. In addition, the number of terminals to measure resistances is also not limited to "2". The resistances R1, R2, R3, and R4 are set to different resistances, and differences between the resistances R1, R2, R3, and R4 are set to be greater than maximum resistance variations δR1 δR2, δR3, and δR4 that are generated and obtained when the conduction paths 92 sense deformations within standards.

The conduction circuit 201 is formed directly in the conduction-path-equipped member 202. Methods of forming the conduction path 92 may include coating, transferring, lithography, cutting, vapor deposition, printing, and a semiconductor process. An electric resistor may be formed by forming a thin film of metal with a high resistance, such as nichrome or tungsten, as the conduction path 92, and forming a thin film of metal with a low resistance, such as copper or aluminium, as a good conductor. Further, in a case in which the conduction-path-equipped member 202 is an electric conductor, the conduction circuit 201 may be formed after applying an insulator as a base. The base may include, for example, polymethyl methacrylate (PMMA) resin.

In the example of (a) of FIG. 23, a combined resistance R between the terminal A and the terminal B is in a normal state without interfering in the conduction-path-equipped member 202. In a case in which all circuit patterns are connected, a relationship of 1/R=1/R1+1/R2+1/R3+1/R4 may be established, and the combined resistance R may be obtained by calculation.

Further, when a deformation or a change in temperature occurs in the conduction-path-equipped member 202, the change may be sensed based on a change in the resistance of the conduction path 92. For example, when the conduction path 92 having the resistance R1 is deformed by a distortion and the resistance increases by δR1, a relationship of 1/R=1/(R1+δR1)+1/R2+1/R3+1/R4 is established. Various phenomena or changes in a physical state may be sensed based on a change in the combined resistance R.

In this regard, when assuming that the conduction-path-equipped member 202 is damaged due to a vibration or degradation over time, and a cut part 203 is generated as shown in (b) of FIG. 23, a combined resistance R' between the terminal A and the terminal B may satisfy a relationship of 1/R'=1/R2+1/R3+1/R4. Thus, by referring to the resistance between the terminal A and the terminal B, occurrence of a problem in the conduction-path-equipped member 202 may be detected. Since R1 to R4 are set as different resistances, a conduction path 92 connected to a path in which a problem occurs may be detected by measuring an electric resistance between the terminal A and the terminal B. Although an example of electric resistors being arranged simply in parallel is illustrated herein, the conduction circuit 201 may also be provided in a structure in which electric resistors are connected in series, or in a structure in which series connection and parallel connection are mixed.

FIG. 24 illustrates an example of a conduction circuit 204 having a shape of 2D matrices, which is a modified example of the conduction circuit 201 of FIG. 23. The 2D matrices-shaped conduction circuit 204 as shown in (a) of FIG. 24 is configured by connecting a plurality of conduction paths 92 being electric resistors to each other in a shape of a mesh (shape of grids). A conduction path 92 and another conduction path 92 are connected in a circuit pattern formed by good conductors. The conduction circuit 204 includes a terminal A, a terminal B, a terminal C, and a terminal D to measure electric resistances. For example, by measuring a resistance between the terminal A and the terminal C, a change in the conduction-path-equipped member 202 may be sensed.

Further, when one of the plurality of conduction paths 92 is disconnected or disabled, rough disablement information regarding whether the disconnection occurred at a single position or at least two positions may be obtained simply although the conduction paths 92 have the same electric resistances. Further, when the respective conduction paths 92 have different prime resistances in unit of ohms, for example, 2 kiloohms, 3 kiloohms, and 5 kiloohms, a disabled, for example, fractured, portion of the conduction-path-equipped member 202 in which the conduction paths 92 are formed may be estimated by measuring resistances between terminals. For example, when all resistances are set to prime numbers, a resistance of a disconnected conduction path may be estimated from a factorization of a prime product included in a combined resistance at a parallel circuit, and thus a position of the disconnected conduction path 205 may be specified.
(b) of FIG. 24 illustrates another modified example of the conduction circuit 204 having the shape of 2D matrices. In this conduction circuit 204, conduction paths 92 disposed in a shape of matrices are connected to each other in series. In a case of this series circuit, the whole of the conduction circuit 204 may not be sensed when a portion is disconnected, and thus an abnormality may be detected based on the disconnection. Meanwhile, a conduction circuit including parallel connection as shown in (a) of FIG. 23 or (a) of FIG. 24 may be suitable for measurement for a long time since sensing may be performed using a remaining portion although a portion is disconnected.

Further, although (b) of FIG. 24 illustrates only the terminal A and the terminal B, a portion of the structure being damaged may be specified later by installing terminals to measure the respective conduction paths 92 (or a predetermined group of a plurality of conduction paths 92). Thus, in regular sensing, by measuring a resistance between the terminal A and the terminal B, a safety of the whole of the conduction-path-equipped member 202 may be checked easily. At the same time, when performing a detailed inspection after an abnormality is detected or an unexpected event such as earthquakes occurs, by measuring each resistance between conduction paths 92, a portion of the conduction-path-equipped member 202 being damaged may be specified.

As shown in FIGS. 23 and 24, the conduction circuit including the conduction paths 92 widening in a 2D plane has an electric resistance that changes as a length or a thickness thereof changes. Thus, by embedding a conduction-path-formed member having a shape of a sheet or a mesh in which this conduction circuit is formed in a construction such as a road, a floor or a wall, a deformation occurring when or after asphalt or concrete is hardened may be sensed in real time. Further, applications of embedding or attaching the member having the shape of the sheet are particularly suitable for interpreting a process of constructing a huge structure such as a dam, an airport runway, a harbor, a high-rise edifice, a water supply and sewerage network, a highway or an overpass of a railroad, or interpreting a disablement thereof. In addition, by disposing memories in a portion of each conduction circuit to preserve sensing history data, a history of vibrations occurring during the constructing process may be accumulated accurately, and posterior data falsification may be prevented.

Further, in the examples of FIGS. 23 and 24, a deformation of the conduction-path-equipped member is generally sensed. Further, when a cut part is generated in the conduction circuit, a position thereof may be specified easily. Meanwhile, the examples may also be utilized to restrictively detect a cut of the original conduction-path-equipped member (that is, a disconnection of the conduction circuit).

Further, although FIG. 24 illustrates a case of connecting the plurality of conduction paths 92 in a shape of 2D matrices, the plurality of conduction paths 92 may also be connected to each other in a shape of 3D matrices (3D shape). It is exceptionally suitable for a case in which the conduction-path-equipped member is a 3D structure.

Further, to install the plurality of conduction paths 92 having different resistances directly in the conduction-path-equipped member as shown in FIG. 23 or 24, a circuit pattern thereof needs to be designed in advance. In this example, a plurality of pieces of basic pattern information having predetermined resistances may be prepared in a memory of such as a computer. Circuit data may be generated by combining such pattern information using a circuit generation program executed by the computer. The circuit data may be transmitted to a printer or a semiconductor film forming device. By applying/printing a metal paste, or depicting a resist film of a semiconductor process, an actual conduction circuit may be formed. An example of this type of designing process is illustrated in FIG. 25.
(a) of FIG. 25 illustrates, in a reference range having a predetermined area, such as a square (not limited to the square, for example, a regular triangle, a rectangle, a rhombus, a regular hexagon, or other suitable geometric shapes), pattern information 206a including a pair of terminals 207 disposed at centers of opposite sides, and a unit resistor 208 disposed between the pair of terminals 207. The unit resistor 208 is set to have a reference resistance, for example, 1 kiloohm, and thus the print pattern information 206a is a 1-kiloohm pattern.

Pattern information 206b as shown in (b) of FIG. 25 includes two unit resistors 208 directly between the pair of terminals 207, and thus is a 2-kiloohm pattern. Pattern information 206c as shown in (c) of FIG. 25 is a 3-kiloohm pattern, pattern information 206d as shown in (d) of FIG. 25 is a 5-kiloohm pattern, and pattern information 206e as shown in (e) of FIG. 25 is a 7-kiloohm pattern.

Further, pattern information 206f as shown in (f) of FIG. 25 includes a total of four terminals 207 disposed at centers of all directions in a square reference range. A unit resistor 208 is disposed at a junction of all the terminals 207. In doing so, when predetermined two terminals 207 among the total of four terminals 207 are used, a resistance of 1 kiloohm may be obtained. In addition, as shown in pattern information 206g, 206h, and 206i of (g), (h), and (i) of FIG. 25, patterns for connecting good conductors only may be prepared. By accumulating the pattern information 206a through the pattern information 206i in the memory of the computer, and combining the information on a program, pattern information (circuit information) having a desired resistance may be generated easily. Further, although a case of disposing a terminal linked to an adjacent pattern at a center of each side of the square reference range is illustrated herein, the terminal linked to the adjacent pattern may also be disposed at each corner of the square reference range.

FIG. 26 illustrates circuit information generated by combining fifteen pieces of pattern information. Here, a 4-kiloohm conduction circuit, a 13-kiloohm conduction circuit, and a 14-kiloohm conduction circuit, each in which a plurality of pieces of pattern information is disposed in series, are connected to each other in parallel. For example, the circuit information may be input into an applying device, and the applying device may apply a good conductor paste or a resistor paste on a conduction-path-equipped member, whereby a conduction circuit may be formed. Further, the same pattern may be depicted and masked with respect to the conduction-path-equipped member by photoresist, and a desired conduction circuit may be formed by a film forming process such as semiconductor or vapor deposition.

Hereinafter, examples of using a conduction-path-equipped member will be described with reference to FIGS. 27 and 28. (a) of FIG. 27 illustrates a case of forming a conduction circuit in a pillar-shaped structure such as a bridge. A conduction circuit 213 is formed on a pillar 212 (bridge pier). In this example, an organic transistor may be directly printed as the conduction circuit 213. In doing so, an active electric circuit may be formed easily on the pillar 212. In detail, an antenna structure, a resonance circuit, an amplifier circuit, a control circuit, a modulation circuit, or a transmission and reception interface may be printed. When a physical phenomenon such as a deformation, a distortion, an extension and contraction, or a crack occurs in the pillar 212, an antenna structure formed on a surface of the pillar may be displaced or damaged, and thus a resonance frequency may change. When the conduction circuit 213 generally capable of responding is unable to respond sufficiently, the physical phenomenon may be detected accordingly. Further, when the pillar 212 swells, a phenomenon in which an area of an antenna increases and a resonance frequency decreases may be expected. Based on a change in the frequency, quantitative information related to the physical change in the pillar 212 may also be obtained.
(b) of FIG. 27 is a cross-sectional view cut along a line A-A' of (a) of FIG. 27. The conduction circuit 213 may be formed by applying a base 214 of an insulator on a surface of the pillar 212, forming a circuit pattern layer 215, and covering the surface with a water-resistant protection layer 216. However, in a case in which the conduction-path-equipped member being a detection target is an insulator, like a concrete pillar 212, the base 214 may be omitted. In a circuit, using an existing electronic circuit (IC chip), only a structure for detecting a physical phenomenon, for example, an antenna structure, may be printed directly on the conduction-path-equipped member of the pillar 212. The conduction circuit 213 may also be formed using a semiconductor process such as photolithography, or by performing etching after forming a metallic film like a case of preparing a print substrate.

FIG. 28 illustrates another example of a path-equipped member. A path-equipped member 217 is a belt-shaped material having a plurality of conduction circuits. The conduction-path-equipped member 217 is a so-called smart band, and may be spirally wound over a columnar structure 212 such as a bridge pier as shown in (a) of FIG. 28 to reinforce the structure 212 and simultaneously detect a physical phenomenon based on a deformation thereof after the reinforcement. Methods of printing the conduction circuit on the conduction-path-equipped member 217 may include transferring, etching, coating, and a semiconductor process. A material of the conduction-path-equipped member 217 includes fabric, nonwoven fabric, resin, fiber-reinforced synthetic resin including various reinforced fibers such as a carbon fiber, a metal fiber, a silicon fiber and a glass fiber, paper, rubber, or silicone. A material of the conduction path may include aluminium, copper, an organic conductor, or other electric conductors. An ID signal sending circuit may be formed in the conduction circuit 213 to send an independent individual ID. The ID signal sensing circuit may be disposed by attaching an IC chip later. Thus, a position of the conduction-path-equipped member 217 at which each conduction circuit 213 is to be positioned may be verified (identified) in advance. For example, after reinforcement with the smart band 217, individual IDs are received from all conduction circuits 213 through a wireless access device 218, as shown in (b) of FIG. 28, and a position of the structure 212 at which each individual ID (conduction circuit 213) is disposed may be verified and preserved as data. Then, when a deformation or an abnormality occurs in the pillar 212 and thus, for example, the pillar 212 is cracked, a portion of antenna structures of the conduction circuits 213 are damaged. A conduction circuit that used to be accessible may be inaccessible, or a resonance frequency of a predetermined antenna may change. By collecting a corresponding individual ID from the conduction circuit 213 together with information related to the inaccessibility or the change in the frequency, a disabled portion of the pillar 212 may be detected without peeling off a reinforcing material. Further, although a case of assigning an individual ID to each conduction circuit 213 is illustrated herein, a partial ID may be assigned in a unit of the conduction-path-equipped member 217 being a smart band, or an ID may be assigned based on other rules.

Further, as the conduction-path-formed member, cables such as various types of power cables including high-voltage ones, middle-voltage ones and low-voltage ones, various types of pipes for water supply, sewerage, gas, steam, various medicines and oil, and various members of a joint for a pipe may be used.

### <Other aspects>

In addition to the foregoing, the present invention may be applicable to multipurpose mechanical parts. For example, a linear part may include a linear shaft, a shaft holder, a set collar, a linear bushing, a ball guide, a spline, an oil-free bushing/washer, an oil-free bushing, an oil-free washer, an oil-free material (round bar/pipe), an oil-free plate/guide rail, an oil-free plate, an oil-free guide rail, an oil-free material (plate), a liner guide, a cable carrier, a ball screw, a support unit, a squared thread/sliding thread, a nut for a squared thread, a sliding thread, a cross roller, a cross roller table, a cross roller ring, a linear ball slide, a linear rail, an actuator, an index table, a power cylinder/jack, and bellows. Further, a rotating part may include, for example, a bearing, a bearing holder, a cam follower, a roller follower, a rotating shaft, and a driving shaft. A connecting/link part may include, for example, a stepped screw for fulcrum, a hinge pin, a hinge base, a hinge bolt, a link, a rod end bearing, a connecting rod, a link cable, and a link wire. Further, a transmission part may include, for example, a coupling joint such as a rigid type, a universal joint, a chain coupling or a flange type, a timing belt, a round belt, a V belt, a pulley, a chain, a sprocket, a chain bolt, a turn buckle, a tensioner, a gear or ratchet such as a spur gear, a bevel gear, a helical gear, a screw gear, a worm gear, a rack gear or an internal gear, and a ring rail gear. Further, a power source may include motors including a compact AC motor, a stepping motor, a servomotor, a brushless motor, a brushed DC motor, a general purpose motor, and a gear motor, and a gearbox or reducer including a clutch or a brake, in addition to an engine such as an internal combustion engine and an external combustion engine. Further, a transporting part including a conveyor or a roller, an elevator including a table lifter or an air lifter, and hauling machinery may also be included. Further, a stage part may include a manual or automatic stage in a movable stage of an X axis, a Z axis, XY axes, XYZ axes, a rotation, a gonio, a tilt or multiple axes. A pneumatic device may include a cylinder, an actuator, a valve, a regulator, a lubricator, a solenoid valve for air pressure, a solenoid valve for fluid, an air operated valve, and a pipe fitting. Further, a vacuum part may include a vacuum pipe, a vacuum pump, a vacuum generator, an ejector, a vacuum valve, a vacuum filter, a vacuum pressure regulating valve, a suction pad, a vacuum tank, and a chamber. A hydraulic device may include a hydraulic actuator, a hydraulic pump, an oil filter, a hydraulic cylinder, a hydraulic rotary actuator, a hydraulic clamp, a hydraulic pump, an oil filter, a hydraulic valve, a hydraulic hose, and an oil cap. A piping part may include a steel pipe, a copper pipe/stainless steel pipe, and a resin pipe. A fitting may include a screw type fitting, a screw type flange, a hose fitting, a stainless steel pipe fitting, a copper pipe fitting, a steel pipe fitting, a welded type fitting, a welded type flange, a rotary joint, a swivel joint, a mechanical pipe fitting, a resin pipe fitting, an expansion pipe fitting, a PVC pipe fitting, a coupler joint, and a one-touch joint. The valve may include a ball valve, a needle valve, a fluid check valve, a gate valve, a globe valve, a butterfly valve, a diaphragm valve, a pinch valve, an air operated valve, a safety valve, and a regulating valve. A pipe support may include, for example, a suspended pipe metallic fitting, a stand pipe metallic fitting, a floor penetrating metallic fitting, a floor-band, a U-shaped metallic fitting, a saddle band, and a bracket. A piping clamp may include, for example, a manifold, a block manifold, a rotary manifold, a bracket with fitting, and a manifold with magnet. A resin hose may include, for example, a resin hose, a hose band, a hose reel, and a duct hose. Further, a duct piping part may include a duct pipe, a flexible hose, a sanitary piping, a sanitary valve, a sanitary pipe, a sanitary fitting, a clamp, and a gasket. A seal may include an O-ring, an oil seal, a gasket, a seal washer, a seal cap, and a packing. A drainage-related part may include a catch basin, a rain water basin, a cover, a protection lid, a groove lid, and a degassing cylinder. Further, a shelf-related part may include, for example, a shelf, a shelf support, a shelf column, and a shelf board. A hinge may include, for example, a pivot type hinge, a rotary type hinge, and a leaf type hinge, and also include a flat hinge, a flag hinge, a free hinge, a back hinge, a hidden hinge, a spring hinge, and a glass hinge. A fastening member may include, for example, a screw, a bolt, a washer, and a nut. Respective examples thereof may include, for example, a micro screw, a fine screw, a washer mounting screw, a tapping screw, a tap-tight screw, a high-tech screw, a drill screw, a tamper resistant screw, a hex bolt, a hexagon socket head bolt (cap bolt), a low head bolt, a small-diameter bolt, a bolt with through-hole, a hexagon socket button bolt, a hexagon socket flathead bolt, an unified screw, an inch screw, a wit screw, a set screw, a full screw, a stud bolt, a butterfly bolt, a thumbscrew, a dress screw, a square bolt, a ring bolt, a resin screw, a ceramic screw, a dropout adjusting screw, a shoulder bolt, an eye bolt, a rot bolt, a piping U bolt, a wooden screw, a coach screw, a coarse thread, an insert nut, a light hollow screw, a universal screw, a joint connector, a connecting bracket bolt, other woodworking screws, other screws for concrete, other screws for gypsum board, a corrugated sheet screw, a nail, screws for steel plate, a stud-fastening screw, a washer, a screw washer, a flat washer, a spring washer, a toothed washer (inner clip washer), a rosette washer, one/both tongued washer, a tapered washer, a spherical washer, and a dress screw washer. Further, the present invention may be applicable to suitable parts of various types of plants such as a power plant, a complex plant, a crushing plant, a separation plant, a casting plant, a metal processing plant, a woodworking plant, a nuclear power plant, a steam generating plant, a steam power plant, a solar power plant, a regenerative plant, a cooling plant, a liquefaction plant, an electrolytic coating plant, a petroleum chemical plant, a gas plant, a water supply plant, a sewage treatment plant, a waste treatment plant, a resin plant, a metal plant, a concrete plant, and an asphalt plant. Types of a plant may include a nuclear power plant, for example, machine equipment such as a reactor vessel (reactor pressure vessel), a coolant piping (recirculation piping), a coolant pump (recirculation pump), a vacuum generator or a turbine, electric/instrumentation equipment such as a generator, a transformer or a cable, and a concrete structure such as a reactor building or a turbine scaffold. In addition, types of the plant may include a hydroelectric power plant, a wind power plant, a tidal power plant, a geothermal power plant, a solar thermal power plant, an ocean temperature difference power plant, and a thermal power plant. The nuclear power plant may include a nuclear fission plant and a nuclear fusion plant, and a solar power plant and a fuel cell plant power plant may be included. Further, the present invention may be applicable various types of vehicles (constituent parts thereof), for example, a wheelchair, a stroller, a ropeway, a lift, a gondola, an elevator, an escalator, a bicycle, a car, an industrial machine, a construction machine, an agricultural machine, a motorcycle, a snow mobile, an amphibious car, a military vehicle such as a tank or an armored car, a railroad vehicle, a passenger ship, a cargo ship, a fishing boat, a yacht, a boat, a water motorbike, a race boat, a navy vessel, a submarine, a glider, a balloon, an airplane, a vertical takeoff and landing aircraft, a helicopter, an auto-gyroscope, a rocket, an artificial satellite. The wheelchair may include a frame, a main wheel, a caster, a seat, a back support, a foot support, an arm support, a brake, a handle, and a tipping lever. The ropeway, the lift, or the gondola may include a cable, a carrier, and a column. The elevator may include, for example, a control panel, a hoisting machine, a speed governor, a main rope, a governor rope, a basket, a tail cord, and a governor tensioner. The escalator may include a scaffold, a riser, a step chain, a driving roller, a following roller, a driving rail, a following rail, a wheelchair dedicated step, a skirt guard, a comb plate, a driving unit, a driving chain, a handrail driving roller, a handrail chain, a pressure roller, a handrail guide rail, and an inlet. The bicycle may include, for example, a frame and a wheel. The bus, the truck, the car, or the motorcycle may include a vehicular structure such as a chassis, a frame, a reinforcement or a body, a motor, a power transmission device, a steering device, a braking/restraining device, an operating device, a tire wheel, a carrier, and a suspension. The railroad vehicle may include, for example, an underframe, a side structure, an end structure, a roof structure, a driver's platform, a door, a window, a seat, a lighting, an air conditioning device, a toilet, a coupler, a through-passage, a wheel, an axle, a bearing, an axle box supporting device, a bogie frame, a vehicle body supporting device, a driving device, a braking device, a power mechanism, and a pantograph. The ship may include, for example, a deck, an engine, a motor, a screw, a rudder, an anchor, an anchor chain, a radar, an antenna, a chimney, a fuel tank, a ballast tank, a sail, a mast, a ship's bottom, a paddle, and a bridge. The airplane may include, for example, a radome, a wheel, a galley, a passenger seat, a main wing, a horizontal tail wing, a vertical tail wing, a flap, a spoiler, a jet engine, a navigation light, a fuel tank, an aileron, an elevator, a rudder, a main circle casing, a longeron, a cowling, a main wing girder, a wing end plate, a fuselage skin, a circle casing, a horizontal stabilizer, a pressure bulkhead, a vertical stabilizer, a canard, a window, a door, a toilet, a cargo hold, an emergency facility, a propeller, a stack discharger, and a pitot tube. Further, various mechanical devices may include a refrigerator, a belt conveyor, a filling machine, an oven, a reservoir, a stirring machine, a whisk, a pot, a pressure cooker, a freezer, a fryer, a dryer, a sorting machine, a cutting machine, a smoking machine, a bottling machine, a canning machine, a washing machine, a shaving machine, a juicer, a crusher (mill), a fermentor, a burner, a steamer, a sprayer, a press machine, a stretching machine, a spinning machine, a weaving machine, a knitting machine, a sewing machine, a dyeing machine, a chemical fiber machine, a preparation machine (thread connecting machine), a polishing machine, a winder, a printer, a sawing machine, a rotary lathe (rotary cutting machine of log), a hot press, a wood dryer, a chip making machine, a raw wood sorting apparatus, a raw wood feeding machine, a band saw, a rip saw, a planning machine, a chisel machine, a milling machine, a tenon machine, a drilling machine, a sander or disk grinder, and a tightening machine. Further, the present invention may be applicable to sports equipment such as a bat, a glove, a mitt, and a ball of baseball, shoes, a ball, and a goal of soccer, armor or a bamboo sword of kendo, and a racket of tennis. Also, the present invention may also be applicable to musical instruments such as a piano, an electone, various types of wind instruments, and stringed instruments.

The embodiments of the present invention are not limited to the described embodiments. Instead, various changes may be made to these embodiments without departing from the principles and spirit of the invention.

### Description of Reference Numerals

1 Measuring system
10 Construction
12 Column (structure)
14 Roof beam (structure)
30 Conduction-path-equipped member
40 Male screw body
52 Battery
54 Substrate
90 Recess
92 Conduction path
97 Wiring
201 Conduction circuit
202 Conduction-path-equipped member
203 Cut part
204 Conduction circuit
206 Print pattern
207 Terminal
208 Unit resistor
212 Pillar
213 Conduction circuit
214 Base
215 Circuit pattern layer
216 Protection layer
217 Smart band
218 Wireless access device
300 Plate material

## Claims

1. A conduction-path-equipped member, comprising:
a conduction path formed directly in the whole or a portion of a measurement target member to measure a change in the member.

2. The conduction-path-equipped member of claim 1, wherein the member includes a recess, and the conduction path is formed in the recess.

3. The conduction-path-equipped member of claim 2, wherein the recess is configured to define a wiring pattern of the conduction path.

4. The conduction-path-equipped member of claim 1, wherein the whole pattern of a series of conduction paths is installed in a recess forming a series of grooves corresponding to the pattern of the series of conduction paths.

5. The conduction-path-equipped member according to one of claims 1 to 4, wherein the conduction path is formed to reciprocate in a predetermined direction.

6. The conduction-path-equipped member according to one of claims 1 to 5, wherein a plurality of conduction paths is formed independently.

7. The conduction-path-equipped member according to one of claims 1 to 6, comprising:
a first conduction path formed to reciprocate in a first direction; and
a second conduction path formed to reciprocate in a second direction perpendicular to the first direction.

8. The conduction-path-equipped member of claim 7, wherein the first conduction path and the second conduction path are established in parallel.

9. The conduction-path-equipped member according to one of claims 1 to 8, wherein a plurality of conduction paths is formed in a shape of matrices.

10. The conduction-path-equipped member according to one of claims 1 to 9, wherein the conduction path is configured to include at least two conduction parts having different electric resistances.

11. The conduction-path-equipped member of claim 10, wherein one of the conduction parts constituting the conduction path is a good electric conductor and another of the conduction parts is an electric resistor.

12. The conduction-path-equipped member according to one of claims 1 to 11, wherein the conduction path is configured to include a first conductive material and a second conductive material that are different materials.

13. The conduction-path-equipped member according to one of claims 1 to 12, wherein the conduction path is configured by installing a portion of different electric resistances and/or conductive materials in a line.

14. The conduction-path-equipped member according to one of claims 1 to 13, wherein a plurality of conduction paths is stacked.

15. The conduction-path-equipped member according to one of claims 1 to 14, wherein the conduction path comprises:
a planar resistance wiring provided in a planar shape; and
at least one pair of electrodes to be connected to the planar resistance wiring.

16. The conduction-path-equipped member of claim 15, wherein the conduction path includes a plurality of conductive parts disposed to be spaced apart from each other in a direction of a plane of the planar resistance wiring.

17. The conduction-path-equipped member according to one of claims 1 to 16, wherein the member has a columnar or cylindrical surface, and
the conduction path is formed on the surface.

18. The conduction-path-equipped member according to one of claims 1 to 17, wherein the conduction path is formed in an axial direction and/or a circumferential direction of the surface.

19. The conduction-path-equipped member according to one of claims 1 to 18, wherein the member includes a metallic material, and
the conduction path is formed on a surface of the member through an intervening electric insulation layer.

20. The conduction-path-equipped member according to one of claims 1 to 19, wherein the member includes a plastic or composite material.

21. The conduction-path-equipped member according to one of claims 1 to 20, wherein the member includes glass fiber reinforced plastic, carbon fiber reinforced plastic, silicon fiber reinforced plastic, and metal fiber reinforced plastic.

22. The conduction-path-equipped member according to one of claims 1 to 21, wherein the conduction path is electrically connected to a near field communication tag.

23. The conduction-path-equipped member according to one of claims 1 to 22, wherein the conduction path is electrically connected to a near field communication tag and a power supply device.

24. The conduction-path-equipped member according to one of claims 1 to 21, wherein the conduction path is formed by printing.

25. The conduction-path-equipped member according to one of claims 1 to 24, wherein the conduction path is formed by plating.

26. The conduction-path-equipped member according to one of claims 1 to 25, wherein the conduction path is formed by etching.

27. The conduction-path-equipped member according to one of claims 1 to 26, wherein the conduction path is deformed together with the member to output a change in a stress of the member.

28. The conduction-path-equipped member according to one of claims 1 to 27, wherein the conduction path is formed on a surface and/or a back surface of the member.

29. The conduction-path-equipped member according to one of claims 1 to 28, wherein the conduction path is formed on a peripheral surface of the member.

30. The conduction-path-equipped member according to one of claims 1 to 29, wherein a plurality of conduction paths is connected to each other in a shape of matrices.

31. A method for patterning a conduction path, the method comprising:
forming, by printing and/or plating and/or etching and/or coating and/or foil tamping and/or sputtering, a conduction path directly in a portion of a measurement target member to measure a change in the member.

32. A method for measuring a change in a member using the conduction-path-equipped member according to one of claims 1 to 30, wherein the member being a measurement target member is provided in a shape of a sheet or a mesh, and
the change in the member is measured by embedding the member.

33. A method for measuring a change in a member using the conduction-path-equipped member according to one of claims 1 to 30, wherein the member being a measurement target member is provided in a shape of a belt, and
the change in the member is measured by winding the member around an external member.
